# EUROPÄISCHE PATENTANMELDUNG

(11) **EP 4 749 513 A1**
(43) Veröffentlichungstag der Anmeldung: **27.05.2026**
(21) Anmeldenummer: 25200480.9
(22) Anmeldetag: 05.09.2025
(51) Int. Cl.: G06F 40/35, G06F 40/56

(54) **VERFAHREN UND EINE VORRICHTUNG ZUM ERZEUGEN EINER ERWIDERUNG UNTER VERWENDUNG VON MASCHINELLEM LERNEN**

(30) Priorität: 25.11.2024 DE 102024134657
(71) Anmelder: FORBENCAP GmbH, 87527 Sonthofen (DE)
(72) Erfinder: Götz, Stefan, 85659 Forstern (DE)
(74) Vertreter: advotec.

(57) **Zusammenfassung**

Verfahren zum automatischen Erzeugen einer schriftlichen Erwiderung auf eine schriftliche Mitteilung, umfassend die Schritte: Bereitstellen von Text- und/oder Bilddaten zu der Mitteilung (12, 16); Extrahieren von Text- und/oder Bildinformationen und text- und/oder bildbezogenen Kontextinformationen aus den Text- und/oder Bilddaten (14, 18); Unterteilen der Text- und/oder Bilddaten und/oder der text- und/oder bildbezogenen Kontextinformationen in mitteilungsspezifische Gruppen (14, 20); und Erzeugen der schriftlichen Erwiderung durch ein maschinelles Lemmodell (24, 22) unter Verwendung der Gruppen von Text- und/oder Bilddaten und/oder der text- und/oder bildbezogenen Kontextinformationen sowie von gruppenspezifischen Prompts in Abhängigkeit der Erfüllung eines vorbestimmten Confidence-Scores (26) des maschinellen Lernmodells.

## Beschreibung

Die Erfindung betrifft ein Verfahren und eine Vorrichtung zum automatischen Erzeugen einer schriftlichen Erwiderung auf eine schriftliche Mitteilung. Ferner betrifft die Erfindung ein Computerprogrammprodukt.

### Stand der Technik

Die Erstellung schriftlicher Erwiderungen auf Mitteilungen, Bescheide oder andere Dokumente stellt in zahlreichen Bereichen eine komplexe und zeitintensive Aufgabe dar. Insbesondere in Bereichen wie dem Bauwesen, dem Verkehrsrecht, der Landwirtschaft, dem Gesundheitswesen oder dem Patentwesen erfordert die Bearbeitung solcher Dokumente eine präzise Analyse der enthaltenen Informationen und eine strukturierte Antwort. Dies gilt sowohl für behördliche oder amtliche Bescheide als auch für gerichtlichen, anwaltlichen oder privaten Schriftverkehr.

Der Stand der Technik umfasst Verfahren zur manuellen Verarbeitung solcher Dokumente, bei denen Experten den Inhalt prüfen, relevante Informationen extrahieren und darauf basierend eine Erwiderung formulieren. Dieser Ansatz ist jedoch arbeitsintensiv und anfällig für Fehler, insbesondere bei großen Datenmengen oder komplexen Sachverhalten. Oftmals beinhalten Mitteilungen und Bescheide zudem Verweise auf externe Quellen, wie Gesetze, Verordnungen, technische Standards oder Fachliteratur, die ebenfalls geprüft und in die Antwort integriert werden müssen.

Darüber hinaus steigt die Komplexität durch die zunehmende Verfügbarkeit multimodaler Daten, wie etwa Bildinformationen, Diagrammen oder technischen Zeichnungen, die zusätzlich zum Text analysiert und interpretiert werden müssen. Systeme zur Unterstützung dieser Prozesse basieren bislang häufig auf einfachen regelbasierten Ansätzen, wie Vorlagen oder Datenbanken, die jedoch in ihrer Flexibilität und Skalierbarkeit begrenzt sind. Moderne Technologien, wie optische Zeichenerkennung (OCR), semantische Suchverfahren oder Datenextraktionswerkzeuge, werden zwar eingesetzt, doch bleibt ihre Integration in ein umfassendes System zur Automatisierung von Erwiderungen eine Herausforderung.

Ein weiteres Problem besteht in der Verwaltung großer Datenmengen. Insbesondere bei Dokumenten, die eine erhebliche Länge oder umfangreiche Verweise auf externe Quellen aufweisen, stoßen bestehende Systeme häufig an ihre Grenzen. Die Verarbeitung solcher Dokumente erfordert spezialisierte Verfahren, um sie in handhabbare Einheiten zu unterteilen und effizient zu analysieren.

Zusätzlich fehlt es an Systemen, die den gesamten Prozess der Erstellung von Erwiderungen abdecken, von der Analyse der Eingangsdaten bis hin zur Erstellung einer strukturierten, sachgerechten Antwort. Die bestehenden Lösungen bieten nur Teilfunktionen und erfordern nach wie vor einen erheblichen manuellen Eingriff, was die Bearbeitungskosten erhöht und die Effizienz einschränkt.

Vor diesem Hintergrund ist es eine Aufgabe der Erfindung, ein verbessertes Verfahren und/oder eine verbesserte Vorrichtung anzugeben.

### Offenbarung der Erfindung

Die Aufgabe wird gelöst durch ein Verfahren gemäß den Merkmalen des Patentanspruchs 1. Die Aufgabe wird gelöst durch eine Vorrichtung gemäß den Merkmalen des Patentanspruchs 13.

Gemäß einem bevorzugten Aspekt wird ein Verfahren zum automatischen Erzeugen einer schriftlichen Erwiderung auf eine schriftliche Mitteilung vorgeschlagen, das die Schritte umfasst: Bereitstellen von Text- und/oder Bilddaten zu der Mitteilung, Extrahieren von Text- und/oder Bildinformationen sowie text- und/oder bildbezogenen Kontextinformationen aus diesen Daten, Unterteilen der Daten und/oder der Kontextinformationen in mitteilungsspezifische Gruppen sowie das Erzeugen der schriftlichen Erwiderung durch ein maschinelles Lernmodell unter Verwendung der gruppierten Daten und gruppenspezifischen Prompts in Abhängigkeit von einem vorbestimmten Confidence-Score des maschinellen Lernmodells.

Das Verfahren umfasst das Bereitstellen der Text- und/oder Bilddaten, die den Inhalt der Mitteilung aufweisen. Diese Daten können digitale Dokumente oder digitalisierte Versionen von Papierdokumenten sein. In einem weiteren Schritt werden relevante Informationen aus den Daten extrahiert, wobei sowohl der Textinhalt als auch visuelle Merkmale berücksichtigt werden. Die extrahierten Informationen werden vorzugsweise durch ein maschinelles Lernmodell mit Kontextdaten angereichert, um eine tiefere Analyse und Interpretation zu ermöglichen. Im Anschluss werden die Daten in Gruppen unterteilt, die spezifische Aspekte der Mitteilung, wie Beanstandungen oder Argumente, zusammenfassen. Diese Strukturierung bildet die Grundlage für die weitere Verarbeitung durch das maschinelle Lernmodell, das anhand vorgegebener Prompts eine Erwiderung erstellt. Der Confidence-Score des Modells dient dabei als Maßstab für die Verlässlichkeit der generierten Antwort.

Der Confidence-Score ist ein bevorzugtes Element des Verfahrens und kann in unterschiedlichen Ausprägungen gestaltet sein, um die Qualität und Verlässlichkeit der erzeugten Erwiderung zu bewerten. Der Confidence-Score stellt eine numerische Bewertung dar, die auf verschiedenen Kriterien basiert, wie beispielsweise der Übereinstimmung der generierten Erwiderung mit den extrahierten Informationen, der semantischen Relevanz der Antwort in Bezug auf die ursprüngliche Mitteilung, und der Erfüllung vorgegebener Standards, wie gesetzlicher, technischer oder sprachlicher Vorgaben. Diese Bewertung kann durch das maschinelle Lernmodell selbst oder durch ein zusätzliches Bewertungssystem erfolgen, das speziell für die Qualitätssicherung zuständig ist.

Der Confidence-Score kann dynamisch angepasst werden, indem er aus mehreren Komponenten besteht, die individuell gewichtet werden. Beispielsweise könnte ein hoher Score vergeben werden, wenn das Modell in der Lage ist, komplexe Argumente korrekt zu analysieren und relevante Antworten zu generieren. Andererseits wird ein niedriger Score angezeigt, wenn wesentliche Inhalte fehlen, die Sprache unklar ist oder die Antwort widersprüchliche Informationen enthält. Die Bewertung kann auch auf probabilistischen Methoden beruhen, wobei das Modell seine eigene Sicherheit bezüglich der Korrektheit der Antwort einschätzt. Dies ermöglicht es, Unsicherheiten frühzeitig zu identifizieren und zusätzliche Verarbeitungsschritte einzuleiten, um die Qualität zu verbessern.

Sinnvolle Werte für den Confidence-Score hängen von der Komplexität der Aufgabe und den Anforderungen an die Verlässlichkeit der generierten Antwort ab. In der Regel wird ein numerischer Bereich von 0 bis 1 verwendet, wobei Werte nahe 1 eine hohe Zuverlässigkeit und Werte nahe 0 eine geringe Zuverlässigkeit signalisieren. Vorzugsweise wird ein Schwellenwert zwischen 0,7 und 0,9 definiert, der festlegt, ab wann die generierte Antwort als hinreichend verlässlich gilt. Dieser Bereich bietet einen sinnvollen Kompromiss zwischen der Vermeidung unzuverlässiger Antworten und der Minimierung unnötiger Nachbearbeitung. Der Confidence-Score wird durch das maschinelle Lernmodell vorzugsweise auf Basis interner Wahrscheinlichkeitsbewertungen berechnet, vorzugsweise durch die Auswertung der Modellvorhersagen oder durch die Konsistenz zwischen den generierten Inhalten und den Eingabedaten. Der Score wird vorzugsweise gegen einen vorab definierten Schwellenwert verglichen, der je nach Anwendung und Kontext angepasst werden kann. Liegt der Confidence-Score beispielsweise unterhalb des Schwellenwerts, wird das Modell so konfiguriert, dass vorzugsweise zusätzliche Verarbeitungsschritte eingeleitet werden, wie etwa eine intensivere Datenanalyse, die Erweiterung des Prompts und/oder das Hinzufügen externer Informationen. Vorzugsweise wird der Score auch in einem iterativen Prozess überprüft, indem Ergebnisse mit bereits bekannten Qualitätsstandards und/oder Testfällen verglichen werden. Auch kontextbasierte Datenbankvergleiche sind möglich. Dadurch wird die Konsistenz und Relevanz der generierten Inhalte gewährleistet, während gleichzeitig unnötige Wiederholungen vermieden werden.

Ein technischer Vorteil dieses Verfahrens liegt in der effizienten Verarbeitung großer und komplexer Datenmengen. Durch die automatische Extraktion und Kontextualisierung der relevanten Informationen wird der manuelle Aufwand erheblich reduziert. Die Unterteilung der Daten in spezifische Gruppen ermöglicht es dem Modell, die Mitteilung gezielt zu analysieren und maßgeschneiderte Erwiderungen zu generieren. Der Einsatz gruppenspezifischer Prompts verbessert zudem die Präzision und Relevanz der Antworten, da das Modell spezifisch auf die jeweilige Gruppe abgestimmte Argumentationsmuster anwendet, was ein weiterer Schritt zur Allgemeinen Künstlichen Intelligenz darstellt.

Ein weiterer Vorteil besteht in der Integration eines Confidence-Scores, der die Qualität der generierten Erwiderung bewertet. Diese Funktion erlaubt eine dynamische Anpassung des Verfahrens, beispielsweise durch eine erneute Verarbeitung oder eine Ergänzung externer Informationen, falls der Confidence-Score nicht die gewünschten Anforderungen erfüllt. Dadurch wird die Verlässlichkeit des Verfahrens gesteigert, und mögliche Fehler oder Unklarheiten in der Antwort werden minimiert.

Das Verfahren zeichnet sich zudem durch seine Skalierbarkeit und Flexibilität aus. Die Möglichkeit, sowohl Text- als auch Bilddaten zu verarbeiten, erweitert das Einsatzspektrum erheblich und macht das Verfahren für multimodale Inhalte geeignet. Diese Merkmale sorgen für eine deutlich gesteigerte Effizienz und Präzision bei der Bearbeitung schriftlicher Mitteilungen, insbesondere in Bereichen mit hohen Anforderungen an die Qualität und Konsistenz der Antworten.

Das Verfahren kann auf eine Vielzahl von schriftlichen Mitteilungen angewendet werden, die in unterschiedlichen Bereichen und Kontexten auftreten. Dazu gehören amtliche und behördliche Bescheide, wie z. B. Ablehnungsbescheide zu Anträgen oder Mitteilungen über Sanktionen, die eine präzise und fundierte Erwiderung erfordern. Ebenso können die vom Verfahren verarbeitbaren Mittteilungen gerichtliche Schreiben, wie Ladungen, Urteile und/oder Verfügungen, bei denen rechtliche Argumentationen und Gegenargumente eine Rolle spielen, umfassen. Auch anwaltlicher Schriftverkehr, beispielsweise in Form von Mahnungen, Klageerwiderungen oder Vergleichsangeboten, kann durch das Verfahren bearbeitet werden.

Darüber hinaus ist das Verfahren auf private und geschäftliche Mitteilungen anwendbar, die häufig in Vertragsverhandlungen, Beschwerdeverfahren oder formellen Anfragen auftreten. Die Fähigkeit, multimodale Inhalte zu verarbeiten, erweitert den Anwendungsbereich zusätzlich auf Mitteilungen, die neben Text auch technische Zeichnungen, Diagramme, Fotos und/oder graphisch strukturierten Text wie beispielsweise Tabellen oder Formulare umfassen können, wie sie beispielsweise in technischen, baurechtlichen oder patentrechtlichen Kontexten vorkommen. Die universelle Ausrichtung des Verfahrens macht es zu einem flexiblen Werkzeug zur Automatisierung und Optimierung von Erwiderungsprozessen in vielfältigen Einsatzbereichen.

Das vorliegende Verfahren ermöglicht mehrere technische Effekte, die insbesondere die Effizienz und Qualität bei der automatisierten Erstellung schriftlicher Erwiderungen steigern. Durch die Automatisierung der Verarbeitung von Text- und/oder Bilddaten wird der manuelle Aufwand erheblich reduziert, da Eingabedaten automatisch bereitgestellt, analysiert und strukturiert werden. Die technische Strukturierung der extrahierten Informationen in mitteilungsspezifische Gruppen verbessert die Datenorganisation und erleichtert die zielgerichtete Weiterverarbeitung. Der Einsatz eines maschinellen Lernmodells sorgt für präzise und kontextsensitive Antworten, indem es die gruppierten Daten zusammen mit speziell entwickelten Prompts verwendet. Ein weiterer technischer Vorteil wird durch den Confidence-Score erzielt, der eine systematische Überprüfung der Verlässlichkeit und Qualität der generierten Erwiderung erlaubt. Diese Überprüfung ermöglicht die frühzeitige Erkennung und Korrektur potenzieller Fehler. Darüber hinaus erweitert die simultane Verarbeitung von Text- und/oder Bildinformationen, etwa durch optische Zeichenerkennung und/oder Bildsegmentierung, die Anwendbarkeit des Verfahrens in Szenarien, in denen multimodale Daten vorliegen. Die dynamische Anpassung der Prompts an den jeweiligen Kontext der Mitteilung erlaubt maßgeschneiderte Erwiderungen, was die Relevanz und Qualität der Ergebnisse erhöht. Gleichzeitig gewährleistet die Möglichkeit der parallelen Verarbeitung eine hohe Skalierbarkeit, wodurch auch große Datenmengen effizient bearbeitet werden können.

Erstens ermöglicht die automatische Extraktion und Strukturierung relevanter Informationen aus Text- und/oder Bilddaten, einschließlich der Kontextualisierung durch maschinelle Lernmodelle, eine effiziente Verarbeitung großer und komplexer Datensätze. Dies stellt eine technische Lösung für das Problem der manuellen Analyse dar, die zeitaufwändig und fehleranfällig ist. Zweitens gewährleistet die Unterteilung der extrahierten Daten in spezifische Gruppen eine gezielte Analyse und eine verbesserte Genauigkeit bei der Generierung der Antwort, da das Modell spezifische Argumentationsmuster für jede Gruppe anwenden kann. Drittens führt die Integration eines Confidence-Scores zu einer dynamischen Qualitätskontrolle, indem die Verlässlichkeit der generierten Antwort bewertet wird. Diese technische Maßnahme ermöglicht eine adaptive Anpassung des Verfahrens, beispielsweise durch zusätzliche Verarbeitungsschritte oder die Einbindung externer Datenquellen bei Unterschreitung eines Schwellenwerts, was die Robustheit und Zuverlässigkeit des Systems erhöht. Viertens steigert die Nutzung gruppenspezifischer Prompts die Präzision und Relevanz der generierten Antworten durch gezielte Modellanpassungen, wodurch die Flexibilität und Anpassungsfähigkeit des Verfahrens verbessert werden. Schließlich erlaubt die automatisierte Verarbeitung multimodaler Daten und die dynamische Integration externer Quellen eine systematische Bewältigung von Herausforderungen bei komplexen Mitteilungen, wodurch die Skalierbarkeit und Effizienz im praktischen Einsatz signifikant gesteigert werden. Diese Effekte betreffen eindeutig technische Aspekte und tragen zur Erfindungshöhe bei, indem sie die Leistung und Funktionalität bestehender Lösungen erheblich verbessern.

Vorzugsweise werden die vorstehend beschriebenen Verarbeitungsschritte in einer verwalteten Ausführungsumgebung ausgeführt, die außerhalb des Anwendungsprozesses liegende Ressourcen- und Lifecycle-Telemetrie bereitstellt. Unter einer verwalteten Ausführungsumgebung wird insbesondere eine Plattform-oderchestrierte Laufzeit (z. B. PaaS-Web-App, Container-Orchestrator oder Serverless-Dienst) verstanden, die dem Verfahren Laufzeitkennwerte und Ereignissignale zur Verfügung stellt, ohne dass der Anwendungsprozess selbst diese ermitteln muss. Die bereitgestellte Telemetrie umfasst vorzugsweise wenigstens eine der folgenden Größen: CPU-Drosselung bzw. CPU-Drosselungszeit (Throttling), Arbeitsspeicherdruck (Memory Pressure), Länge der Anfragewarteschlange (HTTP-Queue-Länge), Anzahl gleichzeitiger Verbindungen sowie angekündigte Scale-In- oder Preemption-Signale der Laufzeitumgebung.

Das Verfahren nutzt diese Telemetrie bevorzugt in einem laufzeitadaptiven Regelkreis. Hierzu werden in festen oder gleitenden Intervallen die jeweils aktuellen Telemetriewerte erfasst und einer Steuerlogik zugeführt, welche in Abhängigkeit dieser Werte (i) die Größe und Abarbeitungsreihenfolge der zu verarbeitenden Gruppen und/oder Datenpakete und (ii) die Tiefe einer rückstau-geregelten Warteschlange zwischen Vorverarbeitung - vorzugsweise umfassend einen Retrieval-Schritt - und Modellinferenz dynamisch festlegt und laufend nachführt. Der Regelkreis ist dabei so ausgelegt, dass ein vorgebbarer globaler Speicher- und Latenzgrenzwert eingehalten wird. Der Speichergrenzwert entspricht vorzugsweise einem Maximal-Speicherfußabdruck über alle gleichzeitig aktiven Verarbeitungsschritte; der Latenzgrenzwert definiert bevorzugt eine Obergrenze für die Ende-zu-Ende-Antwortzeit (z. B. P95- oder P99-Latenz).

Zur Einhaltung des Speichergrenzwerts wird die Größe der Datenpakete vorzugsweise adaptiv gewählt. Bei ansteigendem Arbeitsspeicherdruck oder einer erhöhten Page-Fault-Tendenz werden Paketgrößen reduziert und die Abarbeitungsreihenfolge so angepasst, dass speicherintensive Pakete nachrangig behandelt oder in kleinere Teilpakete zerlegt werden. Umgekehrt können bei geringer Auslastung größere Paketgrößen zur Durchsatzerhöhung zugelassen werden. Die Abarbeitungsreihenfolge folgt vorzugsweise einem prioritätsgesteuerten Schema, das neben inhaltlichen Kriterien auch technische Kriterien (Speicherfußabdruck, geschätzte Inferenzzeit, Datenlokalität) berücksichtigt.

Die rückstau-geregelte Warteschlange (Backpressure-Queue) weist bevorzugt eine dynamische Obergrenze der Warteschlangentiefe auf. Diese Obergrenze wird in Abhängigkeit der Telemetrie laufend nachgeführt, wobei insbesondere die Länge der Anfragewarteschlange und die Anzahl gleichzeitiger Verbindungen eine Erhöhung oder Absenkung der Tiefe auslösen können. Bei zunehmender HTTP-Queue-Länge oder aktiver CPU-Drosselung wird die Tiefe vorzugsweise verringert, um Thrashing, Timeouts und Out-of-Memory-Zustände zu vermeiden. Zusätzlich kann die Warteschlange bevorzugt Eingabeströme drosseln, indem neue Pakete erst dann zugelassen werden, wenn die gemessene Inferenzlatenz unter den Latenzgrenzwert absinkt.

Der Retrieval-Schritt der Vorverarbeitung ist vorzugsweise in den Regelkreis eingebunden. Bei hoher Auslastung oder angekündigten Scale-In-/Preemption-Signalen wird die Parallelität externer Abrufe reduziert, die Cache-Trefferwahrscheinlichkeit durch bevorzugte Wiederverwendung kürzlich geladener Kontexte erhöht und die maximale Größe einzubindender Kontexte an den aktuellen Speichergrenzwert angepasst. Dadurch werden Netz- und I/O-Last begrenzt und die nachfolgende Modellinferenz mit stabilen, ressourcenkonformen Eingaben versorgt.

Angekündigte Scale-In- oder Preemption-Signale der verwalteten Ausführungsumgebung werden vorzugsweise frühzeitig ausgewertet. In Reaktion darauf werden laufende Vorverarbeitungsschritte geordnet beendet und nach Möglichkeit in kleinere, wiederaufnehmbare Teilpakete überführt. Gleichzeitig wird die Warteschlangentiefe temporär abgesenkt und die Abarbeitungsreihenfolge derart angepasst, dass kurz vor Abschluss stehende Pakete priorisiert werden, um Abbrüche zu minimieren. Alternativ oder ergänzend kann eine kurzzeitige Erhöhung der Paketgranularität zugelassen werden, sofern der Speichergrenzwert dadurch nicht verletzt wird.

Die Kopplung an die außerhalb des Anwendungsprozesses liegende Telemetrie erlaubt eine ressourcenbewusste Betriebsführung, die unabhängig vom semantischen Inhalt der Mitteilung wirkt. Hierdurch werden technische Effekte erzielt, insbesondere die Reduktion von Speicherfehlern (Page-Faults), die Vermeidung von Überlast- und Drosselungszuständen, die Stabilisierung hoher Lastspitzen durch Backpressure sowie die Einhaltung vorgegebener Antwortzeiten auch bei dynamischen Skalierungsereignissen. Zugleich wird der Gesamtdurchsatz des Systems erhöht, da Paketgröße und Warteschlangentiefe kontinuierlich an das tatsächlich verfügbare Ressourcenbudget angepasst werden.

Die genannten Parameter können vorzugsweise vordefinierten Schwellenwerten und Hysteresen unterliegen, um ein Schwingen des Systems zu vermeiden. So kann beispielsweise eine obere Schwelle für Arbeitsspeicherdruck die sofortige Absenkung der Paketgröße auslösen, während eine untere Schwelle erst nach Ablauf eines Stabilitätsintervalls eine erneute Erhöhung zulässt. Entsprechendes gilt für CPU-Drosselungszeit und HTTP-Queue-Länge. Der Latenzgrenzwert kann dabei statisch vorgegeben oder dynamisch aus betrieblichen Service-Level-Zielen abgeleitet werden.

**In** einer bevorzugten Ausgestaltung werden Mess- und Regelparameter protokolliert und für eine adaptive Kalibrierung herangezogen. Hierdurch kann das Verfahren im Zeitverlauf die Zuordnung "Telemetriezustand → Paketgröße/Warteschlangentiefe" automatisch verfeinern und damit die Einhaltung des Speicher- und Latenzgrenzwerts weiter verbessern. Optional kann die Steuerlogik zusätzlich hardwarenahe Zähler (z. B. Cache-Miss-Raten, Speicherbandbreite) berücksichtigen, soweit diese in der verwalteten Ausführungsumgebung verfügbar sind.

Durch die beschriebene Telemetrie-gekoppelte Ablaufregelung wird die Vor- und Inferenzverarbeitung gegenüber rein inhaltsgetriebenen Verfahren deutlich robuster und effizienter. Insbesondere werden Systemressourcen vorteilhaft genutzt, ohne dass die Präzision der erzeugten Erwiderungen beeinträchtigt wird, da die Anpassungen auf technische Gegebenheiten der Ausführungsumgebung und nicht auf inhaltliche Heuristiken zurückgehen. Dies führt zu einer verlässlichen Einhaltung vorgegebener Speicher- und Latenzbudgets auch unter variierenden Last- und Skalierungsbedingungen.

Es versteht sich, dass die erfindungsgemäßen Schritte sowie weitere optionale Schritte nicht notwendigerweise in der aufgezeigten Reihenfolge ausgeführt werden müssen, sondern auch in einer anderen Reihenfolge ausgeführt werden können. Ferner können weitere Zwischenschritte vorgesehen sein. Die einzelnen Schritte können zudem einen oder mehrere Unterschritte umfassen, ohne dass hierdurch der Umfang des erfindungsgemäßen Verfahrens verlassen wird. Vorliegend soll jedes "und" als "und/oder" und jedes "oder" ebenfalls als "und/oder" interpretiert werden, wenn es nicht offensichtlich technisch abwegig erscheint.

Gemäß einem weiteren Aspekt wird vorgeschlagen, dass bei einem angekündigten Scale-In- oder Preemption-Ereignis in Bearbeitung befindliche Teilaufgaben atomar in einen persistenten Zwischenspeicher serialisiert und auf einer verbleibenden Instanz ohne erneute Vorverarbeitung wiederaufgenommen werden.

"Atomar" bedeutet: der Zustand einer Teilaufgabe wird in einem einzigen, konsistenten Schritt gespeichert - entweder vollständig oder gar nicht. "Serialisieren" heißt: dieser Zustand wird samt nötiger Metadaten (Eingabereferenzen, Offsets, Vorverarbeitungsartefakte, ggf. Retrieval-Treffer, Seeds) in ein prozessunabhängiges Byteformat überführt. Der "persistente Zwischenspeicher" ist ein von der Instanz entkoppeltes, absturzsicheres und für beide Instanzen erreichbares Speicherziel (z. B. Block-/Objektspeicher), das eine Integritätsprüfung erlaubt. "Teilaufgaben" sind klar abgegrenzte Verarbeitungseinheiten aus den Gruppen/Datenpaketen mit eindeutigem Fortschrittsstand (Positions-/Offset-Infos). "Ohne erneute Vorverarbeitung wiederaufgenommen" bedeutet: die Folgeinstanz setzt nach Integritätsprüfung unmittelbar an der zuletzt abgeschlossenen Pipeline-Stufe fort, ohne bereits erledigte Vorverarbeitung zu wiederholen. Ein "angekündigtes Scale-In- oder Preemption-Ereignis" ist ein von der Laufzeitumgebung signalisiertes Abschaltszenario (z. B. Graceful Shutdown/Preemption), das die atomare Sicherung auslöst.

Vorzugsweise wird bei einem angekündigten Scale-In- oder Preemption-Ereignis der verwalteten Ausführungsumgebung der aktuelle Bearbeitungszustand laufender Teilaufgaben atomar gesichert und ohne erneute Vorverarbeitung auf einer verbleibenden Instanz wiederaufgenommen. Unter atomarer Serialisierung ist insbesondere zu verstehen, dass sämtliche für die Fortsetzung erforderlichen Zwischenstände in einem einzigen, konsistenten Schreibvorgang in einen persistenten Zwischenspeicher überführt werden, sodass entweder der vollständige, fortsetzbare Zustand oder kein Zustand abgelegt ist. Der serialisierte Zustand umfasst vorzugsweise strukturierte Metadaten zu Eingabereferenzen, den bereits erzeugten Normalisierungs- und Extraktionsartefakten (z. B. OCR-Ergebnisse, Segmentierungs- und Gruppierungsindizes), den Ergebnissen eines optionalen Retrieval-Schritts (einschließlich Trefferlisten und Caches), dem zugehörigen Prompt-Material sowie den jeweiligen Offsets innerhalb der Datenpakete. Zur Sicherstellung der Idempotenz und Integrität werden die Artefakte bevorzugt in einem inhaltsadressierten Format mit Prüfsummen (z. B. Hash-Werten) abgelegt; deterministische Zufallszustände (Seeds) werden mitgespeichert, um eine bitgenaue Fortsetzung zu ermöglichen. Die Zielinstanz liest den atomar gesicherten Zustand, prüft die Integrität und setzt die Pipeline ab dem zuletzt abgeschlossenen Verarbeitungsschritt fort, ohne bereits vollzogene Vorverarbeitungsschritte zu wiederholen. Bevorzugt wird dieses Vorgehen durch Hysteresen in der Ablaufsteuerung ergänzt, sodass kurz vor Abschluss stehende Teilaufgaben priorisiert fertiggestellt und nur längere Teilaufgaben serialisiert werden. Ein technischer Vorteil dieser Maßnahme liegt in der Vermeidung von Rechenwiederholungen und Netzwerkzugriffen, der Reduktion abgebrochener Arbeiten bei Skalierungsereignissen sowie der Stabilisierung der Ende-zu-Ende-Latenz unter Lastwechseln. Durch die atomare Konsistenz wird gleichzeitig sichergestellt, dass keine inkonsistenten Zwischenstände in den Hauptspeicher der Folgeinstanz gelangen.

Gemäß einem weiteren Aspekt wird vorgeschlagen, dass Modellgewichte, Tokenizer-Tabellen und/oder Embedding-Indizes als unveränderliche, inhaltsadressierte Artefakte auf einem instanznahen Massenspeicher der Ausführungsumgebung gehalten und für die Inferenz read-only über speicherabbildendes Einbinden (Memory-Mapping) mit seiten- und Cache-linien-ausgerichteter Ablage geladen werden, wobei das Verfahren Prefetch-Operationen für erwartete Zugriffsoffsets auslöst und - sofern betriebssystemseitig verfügbar - große Speicherseiten verwendet, derart, dass Page-Fault-Rate, TLB-Miss-Rate und Kalte-Start-Latenz der Inferenz reduziert werden.

Die Ablage der Artefakte erfolgt seiten- und Cache-linien-ausgerichtet; hierbei werden die Binärdaten so platziert, dass ihre Startadressen an die Seitengrößen des Betriebssystems und die Cache-Linienbreite der Zielplattform angepasst sind. Vorzugsweise löst das Verfahren für erwartete Zugriffsoffsets pro Inferenzschritt Prefetch-Operationen aus, sodass die betroffenen Speicherseiten vorab in den Seitencache geladen werden; sofern betriebssystemseitig verfügbar, werden große Speicherseiten verwendet, um die Anzahl erforderlicher TLB-Einträge zu verringern. Aktualisierungen der Artefakte erfolgen nicht inplace, sondern durch Austausch der referenzierten Inhaltsadressen, wodurch parallele Leser nicht beeinträchtigt werden. Mehrere Worker-Prozesse können denselben read-only-Mapping-Bereich gemeinsam nutzen, wodurch Duplikate im Arbeitsspeicher vermieden werden. Ein technischer Vorteil dieser Ausgestaltung besteht in der signifikanten Reduktion der Page-Fault-Rate und der TLB-Miss-Rate sowie in einer verringerten Kalte-Start-Latenz beim Hochfahren oder Skalieren der Inferenzinstanzen. Zusätzlich werden Kopieroperationen vermieden, der Speicherdurchsatz erhöht und der Gesamt-Speicherfußabdruck der Inferenz reduziert, was in der Summe zu einem stabileren und ressourcenschonenden Betrieb der Modellverarbeitung führt.

Gemäß einem weiteren Aspekt wird das Verfahren in einem Zero-Data-Retention-Modus betrieben. Unter Zero-Data-Retention wird verstanden, dass sämtliche Eingabedaten und alle daraus abgeleiteten Zwischenrepräsentationen ausschließlich im flüchtigen Speicher der Ausführungsumgebung verarbeitet werden. Flüchtiger Speicher umfasst hierbei insbesondere Hauptspeicher (RAM) und, sofern verwendet, Grafikspeicher (VRAM). Ein Auslagern in nichtflüchtige Speicherbereiche wird vorzugsweise durch Betriebssystemmittel verhindert, indem Speicherseiten für die Dauer der Verarbeitung gesperrt und Crash- bzw. Core-Dumps deaktiviert werden. Temporäre Ablagen erfolgen bevorzugt ausschließlich in einem flüchtigen Dateisystem, während persistente Dateisysteme schreibseitig gesperrt oder nur read-only eingebunden sind. Nach Bereitstellung der Erwiderung werden die belegten Speicherbereiche deterministisch überschrieben und freigegeben, so dass eine Wiederherstellung der Nutzlastdaten technisch ausgeschlossen ist. Unter Nutzlastdaten werden hier insbesondere auch Tokenizer-Zwischenergebnisse, Embeddings und Retrieval-Treffer verstanden; diese werden weder protokolliert noch in einen Vektorspeicher aufgenommen. Bei angekündigten Scale-In- oder Preemption-Ereignissen werden in Bearbeitung befindliche Teilaufgaben verworfen und nach Wiederaufnahme vollständig neu verarbeitet, ohne dass eine Zwischenspeicherung auf nichtflüchtigen Medien erfolgt. Ein technischer Vorteil dieses Aspekts liegt in der Reduktion der Datenremanenz und der Angriffsfläche, da keine persistenten Kopien von Nutzlast oder Zwischenständen entstehen; gleichzeitig wird durch die deterministische Speicherbereinigung die Vertraulichkeit der verarbeiteten Informationen gewahrt, ohne die Funktionalität des Verfahrens zu beeinträchtigen.

Gemäß einem weiteren Aspekt wird vorgeschlagen, dass etwaige von der Ausführungsumgebung unvermeidbar angelegte Zwischenspeicher auf nichtflüchtigen Medien ausschließlich verschlüsselt mit einem pro Sitzung flüchtig abgeleiteten Schlüssel gehalten werden. Der Sitzungsschlüssel wird vorzugsweise während der Initialisierung aus flüchtigen Entropiequellen abgeleitet und ausschließlich im flüchtigen Speicher vorgehalten. Nach Abschluss der Sitzung wird der Schlüssel vernichtet, so dass eine kryptografische Löschung der zwischengespeicherten Daten erfolgt, ohne dass ein physisches Überschreiben der Medien erforderlich ist. Dieser Aspekt adressiert Systemkomponenten, auf die das Verfahren keinen direkten Einfluss hat (z. B. betriebssystemseitige Caches, Container-Layer oder durch die Plattform erzeugte Puffer) und gewährleistet, dass auch solche unvermeidbaren, kurzzeitig persistenten Artefakte die Vertraulichkeit der Nutzlastdaten nicht beeinträchtigen. Ein technischer Vorteil besteht darin, dass trotz Nutzung einer verwalteten Ausführungsumgebung keine nutzbaren Klartextreste verbleiben und damit das Gesamtsicherheitsniveau des Verfahrens gesteigert wird.

Gemäß einem weiteren Aspekt wird vorgeschlagen, dass die gruppenspezifischen Prompts einen maschinenlesbaren Steuerkopf umfassen, der außerhalb des Modells von der Inferenzlaufzeit ausgewertet wird. Der Steuerkopf ist vorzugsweise als strukturierte, modellagnostische Metadatenrepräsentation ausgebildet und umfasst Felder für ein hartes Token-Budget, eine Ziel-Latenz, einen zulässigen Arbeits-/Grafikspeicherfußabdruck, einen numerischen Präzisionsmodus und/oder eine maximale Attention-Fensterlänge. Die Inferenzlaufzeit stellt in Abhängigkeit dieser Felder die Modellvariante, die Batch-Größe, die Quantisierungsstufe, die Kontextkürzung und/oder die KV-Cache-Wiederverwendung ein. Bei drohender Überschreitung per Telemetrie ermittelter Ressourcen-Grenzen passt ein deterministischer, inhaltsunabhängiger Heuristik-Algorithmus die Reihenfolge und/oder Länge der in den Prompt einzufügenden Gruppen an. Zusätzlich werden content-adressierte Platzhalter-Tokens verwendet, die vom Tokenizer auf vorab zwischengespeicherte Tokenfolgen aufgelöst werden, so dass wiederkehrende Sequenzen ohne erneute Tokenisierung eingebracht werden können. Unklarheiten werden wie folgt verstanden: Der Steuerkopf steuert ausschließlich die Laufzeitparameter der Inferenz und beeinflusst nicht die semantische Antwortfindung des Modells; "hartes Token-Budget" bezeichnet eine verbindliche Obergrenze der einzusetzenden Token für Kontext und Antwort; "content-adressierte Platzhalter-Tokens" sind symbolische Verweise, deren Zielinhalt durch eine stabile Inhaltsadresse eindeutig bestimmt ist. Ein technischer Vorteil dieses Aspekts liegt in der Reduktion des Tokenisierungsaufwands, der Speicherzugriffe und der Kalte-Start-Latenz durch Wiederverwendung bereits vorliegender Tokenfolgen und durch eine ressourcenadaptive Laufzeitkonfiguration. Zugleich werden Page-Fault- und TLB-Miss-Raten verringert und die P95/P99-Antwortzeiten stabilisiert, da die Inferenzlaufzeit die vorgegebenen Grenzwerte für Speicher und Latenz aktiv einhält.

Gemäß einem weiteren Aspekt wird der Confidence-Score laufzeitadaptiv bestimmt. Unter laufzeitadaptiv wird verstanden, dass die Berechnung des Scores die zum jeweiligen Zeitpunkt vorliegenden Betriebsbedingungen der Ausführungsumgebung berücksichtigt und ihre Parameter ohne Neustart des Verfahrens anpasst. Der Confidence-Score wird hierzu aus mindestens zwei der folgenden Komponenten gebildet: (i) einer modellinternen Wahrscheinlichkeitskomponente, die vorzugsweise als Aggregat (z. B. Mittelwert oder Summe) der Log-Wahrscheinlichkeiten eines Antwort-Präfixes berechnet wird, wobei als Antwort-Präfix die ersten T Tokens der vom Modell generierten Erwiderung verstanden werden; (ii) einer Stabilitätskomponente, die eine Abweichung des Antwort-Präfixes bei wenigstens einer kontrollierten Laufzeit-Perturbation und/oder einer einmaligen Mehrfachauswertung misst; sowie (iii) einem Kontextabdeckungsmaß, das die Übereinstimmung der im Prompt referenzierten Kontextsegmente mit den während der Inferenz tatsächlich adressierten Kontextsegmenten ermittelt.

Unter einer kontrollierten Laufzeit-Perturbation wird insbesondere eine gezielte, innerhalb vorgegebener Grenzen liegende Variation mindestens eines laufzeitseitigen Parameters verstanden, ausgewählt aus numerischer Präzision (z. B. Wechsel FP16↔INT8), Batch-Größe, Scheduling-Priorität, Zufalls-Seed/Dropout-Konfiguration oder Verwendung des KV-Caches. Die Stabilitätskomponente kann vorzugsweise als Distanzmaß zwischen dem ursprünglichen und dem perturbierten Antwort-Präfix bestimmt werden (beispielsweise mittels Token-Übereinstimmung, Edit-Distanz, Winkeldistanz in einem Einbettungsraum oder Kullback-Leibler-Divergenz der tokenweisen Wahrscheinlichkeitsverteilungen). Die Länge des Antwort-Präfixes T ist konfigurierbar und wird bevorzugt so gewählt, dass ein repräsentativer, jedoch rechenökonomischer Abschnitt der Antwort abgedeckt wird; die zur Stabilitätsbestimmung erzeugten Zwischenstände werden nicht persistent gespeichert.

Das Kontextabdeckungsmaß basiert vorzugsweise auf content-adressierten Kontextsegmenten im Prompt und den während der Inferenz tatsächlich genutzten Segmenten. Die tatsächliche Adressierung kann dabei indirekt aus Modell-Laufzeitindikatoren abgeleitet werden, beispielsweise aus Zugriffen auf KV-Cache-Einträge, aus Positions-/Segment-Masken des Attention-Mechanismus oder aus protokollierten Kontext-Lookups der Retrieval-Stufe. Eine hohe Übereinstimmung signalisiert, dass die vom Prompt vorgesehenen Belegstellen das Antwort-Präfix tatsächlich getragen haben.

Unterschreitet der zusammengesetzte Confidence-Score einen vorgegebenen Schwellwert, passt die Inferenzlaufzeit ressourcenadaptiv mindestens einen Betriebsparameter an, ausgewählt aus Präzisionsmodus, Batch-Größe, Paketgröße, Kontextfenster oder Modellvariante. Ressourcenadaptiv bedeutet, dass Anpassungen nur vorgenommen werden, sofern die außerhalb des Anwendungsprozesses erfasste Telemetrie (insbesondere Arbeitsspeicherdruck, CPU-Drosselung, Anfragewarteschlangenlänge, aktive Verbindungen und/oder angekündigte Scale-Ereignisse) die Einhaltung eines vorgebbaren globalen Speicher- und Latenzbudgets erwarten lässt; andernfalls wird die Anpassung zurückgestellt oder eine weniger ressourcenintensive Alternative gewählt (z. B. Kontextkürzung statt Modellwechsel).

Ein technischer Vorteil dieser Ausgestaltung liegt darin, dass die Qualitätseinschätzung der Modellantwort nicht allein auf modellinternen Wahrscheinlichkeiten beruht, sondern durch eine robuste Stabilitätsprüfung und eine nachweisbare Kontextabdeckung ergänzt wird. Hierdurch werden Fehlkonfidenzen reduziert und fehleranfällige Antwortverläufe früh erkannt. Die gekoppelte, telemetriegestützte Laufzeitanpassung führt zudem zu stabileren P95/P99-Antwortzeiten und einer begrenzten Speicherbelegung, da Präzision, Batch- und Paketgrößen sowie ggf. das Kontextfenster gezielt innerhalb der verfügbaren Ressourcen optimiert werden. Insgesamt erhöht die beschriebene Ermittlung und Nutzung des Confidence-Scores die Zuverlässigkeit der erzeugten Erwiderungen und verbessert zugleich die ressourceneffiziente Betriebsführung des Systems.

Gemäß einem weiteren Aspekt wird eine Vorrichtung zum automatischen Erzeugen einer schriftlichen Erwiderung auf eine schriftliche Mitteilung vorgeschlagen, umfassend eine Recheneinheit, die ausgebildet ist, die Schritte eines vorliegenden Verfahrens in einer seiner Ausführungsformen auszuführen.

Die für das Verfahren gemachten Ausführungen gelten für die Vorrichtung entsprechend und umgekehrt. Dabei versteht es sich, dass sprachliche Abwandlungen von verfahrensmäßig formulierten Merkmalen nach sprachüblicher Praxis für die Vorrichtung umformulierbar sind, ohne dass derartige Formulierungen explizit hier aufgeführt werden müssen.

Gemäß einem weiteren Aspekt wird ein Verfahren vorgeschlagen, bei dem die Text- und/oder Bilddaten als digitales Dokument oder als digitalisiertes Dokument, das auf Basis eines Papierdokuments erzeugt wurde, bereitgestellt werden. Dieser Aspekt ermöglicht es, verschiedene Formate von Eingangsdaten flexibel zu integrieren und somit eine Vielzahl von Quellen und Dokumenttypen zu berücksichtigen, unabhängig davon, ob diese bereits in digitaler Form vorliegen oder zunächst digitalisiert werden müssen. Die Bereitstellung digitaler Dokumente umfasst vorzugsweise alle Arten von Datenformaten, wie Textdateien, PDFs, Bilder oder strukturierte Formate wie Tabellen, Formulare und/oder Datenbanken. Diese Daten können vorzugsweise direkt in das Verfahren eingespeist und verarbeitet werden. Wenn die Dokumente in Papierform vorliegen, werden sie vorzugsweise durch Digitalisierungsverfahren, wie beispielsweise durch optische Zeichenerkennung (OCR), in ein maschinenlesbares Format umgewandelt. Dabei werden vorzugsweise sowohl der Textinhalt als auch grafische Informationen, wie Diagramme, Tabellen, Formulare, Formularfelder und/oder handschriftliche Notizen, extrahiert und für die weitere Verarbeitung verfügbar gemacht. Die Kombination aus direkter digitaler Bereitstellung und Digitalisierung ermöglicht eine nahtlose Integration unterschiedlicher Dokumenttypen in den Prozess.

Ein technischer Vorteil dieses Aspekts ist die erhöhte Flexibilität und Kompatibilität des Verfahrens mit verschiedenen Datenquellen. Durch die Fähigkeit, sowohl digitale als auch digitalisierte Dokumente zu verarbeiten, wird sichergestellt, dass das Verfahren in Umgebungen eingesetzt werden kann, in denen Papierdokumente noch eine zentrale Rolle spielen, ohne die Effizienz der automatisierten Verarbeitung zu beeinträchtigen. Gleichzeitig wird durch die Unterstützung nativer digitaler Formate eine schnelle und direkte Verarbeitung ermöglicht, was den gesamten Prozess beschleunigt.

Ein weiterer Vorteil liegt in der Qualitätssicherung durch den Einsatz moderner OCR-Technologien. Diese ermöglichen eine präzise Texterkennung, selbst bei schlecht lesbaren Dokumenten oder komplexen Layouts. Dadurch wird sichergestellt, dass keine relevanten Informationen verloren gehen und alle Inhalte für die nachfolgenden Verarbeitungsschritte zugänglich sind. Zudem kann das Verfahren auf multimodale Daten zugreifen, da neben Text auch grafische Inhalte, wie technische Zeichnungen oder Diagramme, extrahiert und verarbeitet werden können.

Durch die Unterstützung von digitalisierten Papierdokumenten wird auch eine bessere Archivierung und Nachverfolgbarkeit der Eingangsdaten ermöglicht. Digitalisierte Dokumente können strukturiert gespeichert und bei Bedarf erneut analysiert werden. Dies erhöht die Transparenz und Nachvollziehbarkeit des Verfahrens und stellt sicher, dass alle Schritte dokumentiert und reproduzierbar sind. Zusammenfassend führt dieser Aspekt zu einer gesteigerten Effizienz, einer höheren Datenqualität und einer erweiterten Einsatzmöglichkeit des Verfahrens in unterschiedlichen Anwendungsbereichen.

Gemäß einem weiteren Aspekt wird ein Verfahren vorgeschlagen, wobei die schriftliche Mitteilung einen Verweis auf ein externes Dokument und/oder auf eine externe Text- und/oder Bildquelle umfasst und das Verfahren ein Zugreifen auf das externe Dokument und/oder die externe Quelle unter Verwendung von Web-Scraping, Application Programming Interfaces (APIs), Datenbanken, Wissensgraphen, semantischen Suchen, internetbasierten Suchanfragen, Legal-Tech-Integrationen, Fachplattformen, der Verarbeitung von Verweisen oder kontextbasierten Ontologien ermöglicht. Vorzugsweise kann dieses Verfahren auch durch die Nutzung von Agenten-Modellen erweitert werden, die vorzugsweise den Zugriff und die Verarbeitung dynamisch koordinieren.

Dieses Verfahren zeichnet sich dadurch aus, dass Verweise, die in der schriftlichen Mitteilung umfasst sind, automatisch erkannt, interpretiert und/oder (weiter) verarbeitet werden. Externe Dokumente und/oder Quellen können dabei durch eine Vielzahl von Technologien erschlossen werden. Vorzugsweise erfolgt die Verarbeitung durch Web-Scraping, um Inhalte direkt von Webseiten zu extrahieren, oder durch APIs, die eine strukturierte und zuverlässige Verbindung zu externen Systemen, beispielsweise Datenbankservern, bereitstellen. Zusätzlich können Datenbanken und Wissensgraphen genutzt werden, um kontextuelle Informationen und semantische Beziehungen zu extrahieren, die für die Erwiderung von Bedeutung sind. Semantische Suchen und internetbasierte Suchanfragen bieten die Möglichkeit, auch bei unvollständigen oder unspezifischen Verweisen relevante Informationen zu identifizieren. Legal-Tech- und Fachplattformen liefern spezialisierte Inhalte für spezifische Domänen, wie juristische oder technische Erwiderungen.

Ein technischer Vorteil dieses Verfahrens liegt in der automatisierten Auflösung und Nutzung von Verweisen, was den Zugang zu relevanten Informationen erheblich vereinfacht und den manuellen Rechercheaufwand reduziert. Vorzugsweise ermöglicht das Verfahren eine dynamische Auswahl der Zugriffsmethoden, abhängig von der Art des Verweises und der Zielquelle. Beispielsweise können Gesetzesverweise durch den Zugriff auf spezialisierte Rechtsdatenbanken bearbeitet werden, während technische Informationen durch Fachplattformen oder Ontologien angereichert werden.

Ein weiterer Vorteil besteht in der Möglichkeit, komplexe und umfangreiche externe Quellen effizient zu verarbeiten, indem Agenten-Modelle den Zugriff und die Extraktion koordinieren. Diese Modelle können den Zugriff priorisieren, parallele Verarbeitungen initiieren und sicherstellen, dass die relevanten Inhalte für die Erstellung der Erwiderung verfügbar gemacht werden. Durch die Integration von Wissensgraphen und Ontologien können semantische Verknüpfungen zwischen den extrahierten Informationen hergestellt werden, wodurch die Relevanz und Präzision der Erwiderung verbessert wird.

Agenten-Modelle sind vorzugsweise technische Konzepte aus der Künstlichen Intelligenz, die Systeme beschreiben, die autonom in einer Umgebung agieren, Entscheidungen treffen und Aufgaben ausführen können, um bestimmte Ziele zu erreichen. Ein Agent kann dabei vorzugsweise als softwarebasiertes oder hardwarebasiertes System verstanden werden, das selbstständig Informationen aus seiner Umgebung aufnimmt, analysiert und darauf basierend Aktionen durchführt. Diese Modelle zeichnen sich vorzugsweise durch ihre Fähigkeit aus, unabhängig zu operieren, flexibel auf Veränderungen zu reagieren und langfristige Ziele proaktiv zu verfolgen.

Ein Merkmal von Agenten-Modellen ist ihre Autonomie. Sie agieren ohne direkte Eingriffe eines Benutzers und treffen eigenständig Entscheidungen, die durch interne Algorithmen gesteuert werden. Durch ihre Reaktivität können sie auf äußere Einflüsse und/oder Veränderungen in der Umgebung reagieren und ihr Verhalten dynamisch anpassen. Gleichzeitig sind Agenten vorzugsweise proaktiv und verfolgen Strategien, um ihre Aufgaben effizient zu erfüllen. Vorzugsweise sind Agenten auch in der Lage, miteinander zu kommunizieren, insbesondere in sogenannten Multi-Agent-Systemen. Diese Systeme umfassen vorzugsweise mehrere spezialisierte Agenten, die miteinander kooperieren, Informationen austauschen und komplexe Probleme gemeinsam lösen.

Ein Agent setzt sich vorzugsweise aus mehreren Modulen zusammen. Ein Wahrnehmungsmodul sammelt vorzugsweise Umgebungsdaten, die durch Sensoren, APIs oder andere Schnittstellen bereitgestellt werden. Vorzugsweise werden diese Daten analysiert und in einer Wissensbasis gespeichert, die sowohl statisches Wissen, wie Regeln oder Ontologien, als auch dynamisches Wissen, wie Ergebnisse früherer Aktionen, enthält. Ein Entscheidungsmodul verwendet diese Informationen vorzugsweise, um anhand von Algorithmen geeignete Handlungen zu planen. Die Ausführung der geplanten Aktionen erfolgt durch ein Ausführungsmodul, das beispielsweise Anfragen versendet, Prozesse startet oder mit externen Systemen interagiert. **In** Multi-Agent-Systemen ermöglicht ein Kommunikationsmodul vorzugsweise den Austausch von Informationen zwischen Agenten.

**In** der Workflow-Automatisierung können Agenten-Modelle vorzugsweise Aufgaben koordinieren, Prozesse optimieren und Entscheidungen effizient verteilen. **In** Multi-Agent-Systemen teilen sich Agenten vorzugsweise spezialisierte Rollen, um gemeinsam komplexe Aufgaben zu lösen. Durch ihre Fähigkeit, kontinuierlich zu lernen, verbessern Agenten ihre Leistung über die Zeit, was sie besonders nützlich für dynamische und sich verändernde Umgebungen macht.

Ein technischer Vorteil von Agenten-Modellen ist ihre Flexibilität. Sie reagieren dynamisch auf Veränderungen in der Umgebung und passen ihre Strategien entsprechend an. Darüber hinaus sind sie skalierbar, da neue Agenten einfach in bestehende Systeme integriert werden können, ohne die Funktionsweise des Gesamtsystems zu beeinträchtigen. Agenten reduzieren durch ihre Autonomie den manuellen Aufwand erheblich und steigern gleichzeitig die Effizienz von Prozessen.

Gemäß einem weiteren Aspekt wird ein Verfahren vorgeschlagen, wobei das externe Dokument und/oder die externe Text- und/oder Bildquelle durch das maschinelle Lernmodell vorverarbeitet werden, vorzugsweise durch Textextraktion, Strukturierung, Zusammenfassung, Klassifikation, Relevanzbewertung, Bildverarbeitung, Verarbeitung von Verweisen, Tokenisierung, Named Entity Recognition (NER), multimodale Verarbeitung oder durch eine Kombination dieser Maßnahmen.

Das Verfahren ermöglicht es, externe Dokumente und Quellen effizient zu analysieren und für die weitere Verarbeitung aufzubereiten. Vorzugsweise erfolgt die Textextraktion mittels optischer Zeichenerkennung (OCR), insbesondere bei digitalisierten Papierdokumenten, um maschinenlesbare Texte zu erzeugen. Eine anschließende Strukturierung identifiziert und ordnet logische Bestandteile wie Überschriften, Absätze oder Tabellen. Zur inhaltlichen Verdichtung kann eine Zusammenfassung erstellt werden, die entweder extraktbasiert relevante Abschnitte hervorhebt oder abstrakt die wichtigsten Inhalte in prägnanter Form wiedergibt. Die Klassifikation ermöglicht es, Themen, Schlüsselbegriffe oder Verweise innerhalb der Daten zu identifizieren, vorzugsweise zur gezielten Weiterverarbeitung. Die Relevanzbewertung priorisiert die Daten anhand ihrer inhaltlichen Bedeutung, was insbesondere bei großen oder umfangreichen Dokumenten hilfreich ist.

Wenn externe Bilddaten vorliegen, können diese durch Objekterkennung, Bildsegmentierung oder Annotation aufbereitet werden. Vorzugsweise wird eine textuelle Beschreibung der Bildinhalte generiert, die in die weitere Analyse einfließen kann. Eine Verarbeitung von Verweisen sorgt dafür, dass Links oder Querverweise auf andere Dokumente automatisch aufgelöst und deren Inhalte integriert werden. Bei langen Dokumenten erfolgt eine Tokenisierung oder hierarchische Verarbeitung, um die Daten in handhabbare Segmente zu unterteilen. Named Entity Recognition wird verwendet, um spezifische Entitäten wie Namen, Gesetze oder Aktenzeichen zu extrahieren und deren Beziehungen zu analysieren. In Fällen, in denen Text- und Bilddaten kombiniert vorliegen, erlaubt die multimodale Verarbeitung eine gemeinsame Analyse, wodurch die Daten in einem umfassenderen Kontext interpretiert werden können.

Der technische Vorteil dieses Verfahrens liegt in der Fähigkeit, große und komplexe Datenmengen automatisch zu analysieren und zu strukturieren, was den manuellen Aufwand erheblich reduziert. Vorzugsweise wird durch die Kombination mehrerer Vorverarbeitungsmethoden eine höhere Genauigkeit und Effizienz erreicht. Die Textextraktion und anschließende Strukturierung gewährleisten, dass alle relevanten Inhalte in einem einheitlichen Format vorliegen und für die nachfolgenden Schritte zugänglich sind. Die Zusammenfassung und Klassifikation reduzieren die Informationsflut, indem sie sich auf wesentliche Inhalte konzentrieren.

Die Bildverarbeitung erweitert das Spektrum der analysierbaren Daten, insbesondere in technischen oder rechtlichen Kontexten, in denen visuelle Informationen eine wichtige Rolle spielen. Die Verarbeitung von Verweisen erleichtert die Integration externer Quellen, wodurch zusätzliche Kontexte berücksichtigt werden können. Durch Tokenisierung und hierarchische Verarbeitung werden auch besonders lange Dokumente effizient bearbeitet. Die Kombination von Text- und Bilddaten durch multimodale Modelle ermöglicht eine tiefere inhaltliche Analyse und liefert präzisere Ergebnisse. Insgesamt führt dieses Verfahren zu einer erheblichen Verbesserung der Geschwindigkeit, Genauigkeit und Skalierbarkeit bei der Verarbeitung externer Daten.

Gemäß einem weiteren Aspekt wird ein Verfahren vorgeschlagen, wobei bei einer Größe des externen Dokuments und/oder der externen Text- und/oder Bildquelle, die eine maximale Anzahl von Verarbeitungstokens des maschinellen Lernmodells übersteigt, eine Unterteilung des externen Dokuments und/oder der externen Text- und/oder Bildquelle in Datenpakete auf Basis der maximalen Tokenlänge erfolgt, vorzugsweise mit einer parallelisierten Vorverarbeitung der unterteilten Datenpakete und/oder einer hierarchischen Verarbeitung der unterteilten Datenpakete.

Das Verfahren adressiert das Problem, dass maschinelle Lernmodelle, insbesondere große Sprachmodelle (LLMs), typischerweise Beschränkungen in der Anzahl der Tokens aufweisen, die sie in einer einzelnen Verarbeitungsoperation analysieren können. Vorzugsweise werden externe Dokumente, die diese Token-Grenze überschreiten, in kleinere, verarbeitbare Segmente unterteilt. Die Unterteilung erfolgt anhand der Struktur des Dokuments, wie Absätze, Kapitel, Themen und/oder logische Einheiten, oder, falls eine solche Struktur nicht vorhanden ist, anhand einer festgelegten Token-Anzahl. Dies stellt sicher, dass alle relevanten Inhalte für die Analyse verfügbar bleiben, ohne dass die Token-Grenze des Modells überschritten wird.

Um die Effizienz des Verfahrens zu maximieren, können die unterteilten Datenpakete vorzugsweise parallelisiert verarbeitet werden. Dies bedeutet, dass mehrere Segmente simultan analysiert und aufbereitet werden, was die Gesamtverarbeitungszeit erheblich reduziert. Eine hierarchische Verarbeitung kann zusätzlich implementiert werden, um sicherzustellen, dass die Beziehungen zwischen den Segmenten erhalten bleiben. In einer solchen hierarchischen Struktur könnten zunächst einzelne Segmente unabhängig analysiert werden, bevor die Ergebnisse auf einer übergeordneten Ebene zusammengeführt werden. Vorzugsweise können dabei auch Kontextinformationen zwischen den Segmenten berücksichtigt werden, um sicherzustellen, dass die Analyse kohärent bleibt.

Der technische Vorteil dieses Verfahrens liegt in der Fähigkeit, auch sehr große Dokumente oder Datenquellen effizient und präzise zu verarbeiten. Durch die Unterteilung in kleinere Einheiten wird sichergestellt, dass die Verarbeitungsgrenzen des Modells eingehalten werden, ohne dass relevante Inhalte verloren gehen. Vorzugsweise ermöglicht die Parallelisierung eine erhebliche Zeitersparnis, insbesondere bei der Bearbeitung von umfangreichen Dokumenten oder einer großen Anzahl von Quellen. Dies ist besonders in Szenarien mit engen Bearbeitungsfristen oder hohen Anforderungen an die Verarbeitungsgeschwindigkeit von Vorteil.

Die hierarchische Verarbeitung trägt dazu bei, die inhaltliche Konsistenz zu wahren, selbst wenn die Daten in kleinere Pakete unterteilt werden. Vorzugsweise können dadurch Beziehungen zwischen verschiedenen Teilen des Dokuments identifiziert und in der späteren Verarbeitung berücksichtigt werden. Dies erhöht die Genauigkeit und Kohärenz der Analyse, insbesondere bei komplexen oder stark vernetzten Datenquellen. Insgesamt ermöglicht dieses Verfahren eine skalierbare und leistungsfähige Verarbeitung von umfangreichen Datenquellen, wodurch die Anwendbarkeit des Verfahrens auf verschiedenste Dokumententypen und Szenarien erweitert wird.

Gemäß einem weiteren Aspekt wird ein Verfahren vorgeschlagen, das um Agenten-Modell-Funktionen ergänzt ist, die die Vor- und/oder Nachverarbeitung der Text- und/oder Bilddaten und/oder der erzeugten Erwiderung automatisieren. Vorzugsweise umfassen diese Agenten-Modell-Funktionen Schritte wie die Textextraktion, Segmentierung, Strukturierung, Klassifikation, Relevanzbewertung, die Integration externer Kontextinformationen durch Verknüpfung mit externen Datenquellen, die automatische Token-Optimierung, die Plausibilitätsprüfung, Fehlererkennung, Qualitätssicherung, die Anpassung von Sprache und Stil, die Zusammenführung von Teilergebnissen, das Einfügen von Referenzen und Metadaten sowie die Automatisierung von Kommunikations- und Archivierungsprozessen.

Das Verfahren ermöglicht durch die Integration von Agenten-Modellen eine weitgehende Automatisierung der Prozesse, die sowohl vor als auch nach der eigentlichen Erstellung der Erwiderung ablaufen. Vorzugsweise wird in der Vorverarbeitung durch Textextraktion und Segmentierung sichergestellt, dass alle relevanten Informationen strukturiert und in einem maschinenlesbaren Format vorliegen. Durch Klassifikation und Relevanzbewertung werden die Informationen weiter aufbereitet, wobei die wichtigsten Inhalte priorisiert und irrelevante Daten gefiltert werden. Die Integration externer Kontextinformationen, vorzugsweise durch Zugriff auf Datenbanken, Wissensgraphen oder APIs, ermöglicht eine inhaltliche Anreicherung der Ausgangsdaten, was die Qualität der generierten Erwiderung erhöht.

In der Nachverarbeitung übernimmt das Agenten-Modell Aufgaben wie die Plausibilitätsprüfung und Fehlererkennung, um die generierte Erwiderung auf inhaltliche Richtigkeit und Konsistenz zu überprüfen. Vorzugsweise wird die Sprache und der Stil der Antwort an den jeweiligen Kontext angepasst, etwa um rechtliche, technische oder geschäftliche Standards zu erfüllen. Zudem können Teilergebnisse, die in der Verarbeitung entstanden sind, automatisch zu einer kohärenten Gesamtantwort zusammengeführt werden. Das Einfügen von Referenzen und Metadaten verbessert die Nachvollziehbarkeit der Erwiderung und ermöglicht eine klare Verlinkung zu den zugrunde liegenden Datenquellen.

Ein technischer Vorteil dieses Verfahrens liegt in der erheblichen Reduzierung des manuellen Aufwands. Vorzugsweise ermöglicht die Automatisierung durch die Agenten-Modell-Funktionen eine schnellere und präzisere Verarbeitung der Eingangsdaten und eine effiziente Erstellung der Erwiderung. Die Fehlererkennung und Plausibilitätsprüfung tragen dazu bei, die Qualität der Ergebnisse sicherzustellen und mögliche Schwächen in der Argumentation oder der Datenverarbeitung frühzeitig zu erkennen. Durch die Integration externer Informationen können auch komplexe und fachspezifische Anforderungen erfüllt werden.

Ein weiterer Vorteil besteht in der Skalierbarkeit des Verfahrens. Vorzugsweise können die Agenten-Modell-Funktionen in Multi-Agent-Systemen koordiniert werden, um parallel an mehreren Aufgaben oder Dokumenten zu arbeiten. Die Automatisierung von Kommunikations- und Archivierungsprozessen erhöht zudem die Effizienz im Umgang mit einer großen Anzahl von Mitteilungen. Insgesamt bietet dieses Verfahren eine hohe Flexibilität und Anpassungsfähigkeit, wodurch es sich für unterschiedlichste Einsatzbereiche und Dokumenttypen eignet.

Gemäß einem weiteren Aspekt wird ein Verfahren vorgeschlagen, wobei, wenn der vorbestimmte Confidence-Score des maschinellen Lernmodells nicht erfüllt wird, mindestens einer der folgenden Schritte ausgeführt wird: die Ermittlung alternativer Strategien, wie Rückzugspositionen, Einschränkungspositionen oder Zugeständnisse, die geeignet sind, den Anforderungen der Mitteilung zu entsprechen; die Benachrichtigung eines Nutzers über das Nichterfüllen des Confidence-Scores, einschließlich einer Übersicht der identifizierten Unsicherheiten sowie Vorschlägen für mögliche Anpassungen oder Ergänzungen der Erwiderung; ergänzende Verarbeitungsschritte, wie eine detailliertere Vorverarbeitung der Text- und/oder Bilddaten, die Erweiterung der Kontextinformationen durch zusätzliche externe Quellen oder die dynamische Anpassung der Prompts; und die Simulation von Szenarien, um die Erfolgsaussichten verschiedener Erwiderungsstrategien zu bewerten und eine optimale Vorgehensweise zu empfehlen.

Das Verfahren sieht vor, dass bei einem Confidence-Score, der unterhalb eines vorgegebenen Schwellenwertes liegt, zusätzliche Maßnahmen ergriffen werden, um die Qualität der generierten Erwiderung zu gewährleisten. Vorzugsweise umfasst dies die Analyse der Ausgangsdaten und die Ableitung von alternativen Strategien, die es ermöglichen, auf die Mitteilung adäquat zu reagieren, selbst wenn die generierten Gegenargumente nicht ausreichen sollten. Rückzugspositionen und Einschränkungsstrategien können hierbei helfen, die Anforderungen des Bescheids teilweise oder in angepasster Form zu erfüllen. Die Benachrichtigung des Nutzers liefert eine transparente Darstellung der Unsicherheiten, sodass gezielte Eingriffe oder Anpassungen erfolgen können.

Ergänzende Verarbeitungsschritte ermöglichen eine erneute Analyse der Eingangsdaten, vorzugsweise durch die Einbeziehung zusätzlicher externer Quellen oder eine detailliertere Kontextbewertung. Dabei kann auch die dynamische Anpassung von Prompts dazu beitragen, die Leistung des Modells zu verbessein. Die Simulation von Szenarien dient dazu, verschiedene Erwiderungsstrategien zu testen und die Erfolgsaussichten vor der endgültigen Generierung der Erwiderung zu bewerten. Vorzugsweise werden dabei auch potenzielle Risiken oder Konfliktpunkte identifiziert.

Ein technischer Vorteil dieses Verfahrens liegt in der robusten Fehlererkennung und der flexiblen Anpassung bei Unsicherheiten. Vorzugsweise stellt der Confidence-Score ein transparentes Maß für die Verlässlichkeit der generierten Antwort dar, wodurch frühzeitig reagiert werden kann, wenn die Modellleistung nicht den Anforderungen entspricht. Die Möglichkeit, alternative Strategien zu entwickeln und dem Nutzer klare Hinweise und Vorschläge zu geben, erhöht die Effizienz und reduziert das Risiko fehlerhafter oder unzureichender Erwiderungen.

Ein weiterer Vorteil besteht in der kontinuierlichen Verbesserung der Modellleistung durch die Ergänzung von Verarbeitungsschritten und die Anpassung von Prompts. Vorzugsweise ermöglicht die Simulation von Szenarien eine fundierte Entscheidungsfindung, die auch bei komplexen oder kritischen Mitteilungen die bestmögliche Vorgehensweise identifiziert. Insgesamt trägt das Verfahren dazu bei, die Qualität und Zuverlässigkeit der Erwiderungen zu steigern, während gleichzeitig die Flexibilität und Anpassungsfähigkeit in dynamischen oder unsicheren Situationen gewahrt bleibt.

Gemäß einem weiteren Aspekt wird ein Verfahren vorgeschlagen, wobei das maschinelle Lernmodell ein Sprachmodell, ein hybrides Modell, ein Transformer-Modell und/oder ein Convolutional Neural Network umfasst, vorzugsweise ergänzt durch ein multimodales Modell, ein großes Sprachmodell (LLM), ein nachtrainierbares Modell, ein hierarchisches Modell oder ein Schüler-Lehrer-Netzwerk.

Das Verfahren nutzt ein maschinelles Lernmodell, das je nach Anforderungen flexibel auf unterschiedliche Technologien und Architekturen zurückgreifen kann. Ein Sprachmodell verarbeitet Textdaten effizient und generiert kohärente und kontextsensitive Antworten. Vorzugsweise wird ein hybrides Modell eingesetzt, das die Stärken verschiedener Ansätze kombiniert, beispielsweise durch die parallele Verarbeitung von strukturierten und unstrukturierten Daten. Ein Transformer-Modell, wie GPT, Llama oder BERT, bietet durch seine Fähigkeit zur kontextuellen Analyse besonders präzise Ergebnisse, insbesondere bei langen und komplexen Texten. Convolutional Neural Networks kommen vorzugsweise bei der Verarbeitung von Bilddaten zum Einsatz, beispielsweise bei der Analyse von Diagrammen oder technischen Zeichnungen.

Erweiterungen durch multimodale Modelle erlauben die simultane Verarbeitung von Text- und Bilddaten, wodurch eine umfassendere Analyse möglich wird. Große Sprachmodelle (LLMs) können durch ihre Fähigkeit zur Generalisierung auf eine Vielzahl von Domänen angewendet werden, während nachtrainierbare Modelle speziell auf die Anforderungen bestimmter Anwendungsfälle abgestimmt werden können. Hierarchische Modelle sind vorzugsweise geeignet, um lange Dokumente zu segmentieren und in einer strukturierten Weise zu verarbeiten. Ein Schüler-Lehrer-Netzwerk ermöglicht eine effiziente Wissensübertragung von einem leistungsstarken, aber ressourcenintensiven Modell zu einem kompakten Modell, das in Echtzeit arbeiten kann.

Ein technischer Vorteil dieses Verfahrens liegt in der Flexibilität und Anpassungsfähigkeit der Modellarchitektur. Vorzugsweise kann das Modell je nach Anforderungen des Anwendungsfalls skaliert und optimiert werden. Die Verwendung von Sprach- und Transformermodellen ermöglicht eine hochpräzise Analyse von Textdaten, während Convolutional Neural Networks und multimodale Modelle die Verarbeitung von Bilddaten oder kombinierten Inhalten erweitern. Dies eröffnet eine Vielzahl von Anwendungsmöglichkeiten, insbesondere in Szenarien mit komplexen oder multimodalen Datenanforderungen.

Ein weiterer Vorteil besteht in der Möglichkeit, das Modell kontinuierlich zu verbessern. Nachtrainierbare Modelle, Transfer-Learning und/oder Schüler-Lehrer-Netzwerke ermöglichen es, neue Daten oder spezifische Anforderungen effizient zu integrieren, ohne dass ein vollständiges Neutraining erforderlich ist. Hierarchische Modelle tragen dazu bei, auch umfangreiche Dokumente effizient zu verarbeiten, während große Sprachmodelle ein hohes Maß an Generalisierung und Domänenkenntnis bieten. Insgesamt führt dieses Verfahren zu einer verbesserten Verarbeitungsgeschwindigkeit, einer höheren Präzision und einer erweiterten Anwendbarkeit auf unterschiedlichste Dokumenttypen und Anforderungen.

Gemäß einem weiteren Aspekt wird ein Verfahren vorgeschlagen, wobei die Erwiderung durch Zusammenfügen von gruppenspezifischen Antworten des maschinellen Lernmodells erzeugt wird, vorzugsweise unter Verwendung eines Templates.

Das Verfahren ermöglicht es, die schriftliche Erwiderung modular zu erstellen, indem spezifische Antworten für einzelne Gruppen von Beanstandungen oder Argumenten generiert werden. Jede Gruppe wird separat analysiert und durch das maschinelle Lernmodell beantwortet, wobei die Antworten kontextsensitiv und auf die jeweilige Gruppe abgestimmt sind. Vorzugsweise erfolgt die Zusammenführung der gruppenspezifischen Antworten in einer strukturierten Weise, die eine klare und logische Darstellung der Erwiderung sicherstellt. Templates können dabei verwendet werden, um einheitliche und formal korrekte Antworten zu gewährleisten, insbesondere in Bereichen, in denen standardisierte Formulierungen oder Argumentationsmuster erforderlich sind.

Ein Template dient dazu, die generierten Antworten in eine vorgegebene Struktur einzubetten, die beispielsweise Abschnitte für Einleitung, Hauptargumente und Schlussfolgerungen umfasst. Vorzugsweise können die Templates dynamisch angepasst werden, um den Anforderungen unterschiedlicher Kontexte gerecht zu werden, wie etwa rechtlicher, technischer oder geschäftlicher Korrespondenz. Die Verwendung von Templates erleichtert zudem die Integration von Metadaten, Referenzen und Verweisen, wodurch die Nachvollziehbarkeit und Konsistenz der Erwiderung erhöht wird.

Ein technischer Vorteil dieses Verfahrens liegt in der modularen und flexiblen Erstellung von Erwiderungen. Vorzugsweise können komplexe Mitteilungen mit mehreren Beanstandungen oder Themen effizient bearbeitet werden, da jede Gruppe individuell analysiert und beantwortet wird. Dies führt zu einer höheren Präzision und einer stärkeren inhaltlichen Tiefe, da das Modell gezielt auf die spezifischen Anforderungen jeder Gruppe eingehen kann. Die Verwendung von Templates sorgt für Konsistenz und spart Zeit, da keine individuelle Formatierung oder Strukturierung der Antwort erforderlich ist.

Ein weiterer Vorteil besteht in der Skalierbarkeit des Verfahrens. Vorzugsweise können die Antworten für verschiedene Gruppen parallel erstellt und anschließend zusammengeführt werden, wodurch die Gesamtbearbeitungszeit reduziert wird. Zudem erleichtert das Template-basierte Vorgehen die Einhaltung formaler Anforderungen und steigert die Effizienz in Szenarien mit einem hohen Volumen an Mitteilungen. Durch die klare Trennung und Zusammenführung der gruppenspezifischen Antworten wird sichergestellt, dass die Erwiderung sowohl kohärent als auch spezifisch bleibt, was die Qualität und Akzeptanz der Antwort erhöht.

Gemäß einem weiteren Aspekt wird ein Verfahren vorgeschlagen, wobei die gruppenspezifischen Prompts durch Prompt-Engineering unter Einbeziehung von Kontextinformationen und/oder gruppenspezifischen Vorgaben erfolgt, vorzugsweise basierend auf gesetzlichen, richtlinienbezogenen und/oder Standardisierungsnormen. Die gruppenspezifischen Prompts können dynamisch anpassbar ausgebildet sein und vorzugsweise Bestandteile aufweisen, die nachtrainierbar und/oder fein abstimmbar sind.

Prompts können nachtrainierbar oder adaptierbar ausgebildet sein, indem sie beispielsweise kontinuierlich durch Nutzungsfeedback und neue Daten verbessert werden. Durch dynamische Anpassungen können Prompts kontextabhängig mit relevanten Informationen angereichert werden, beispielsweise durch die Integration von Schlüsselbegriffen, gesetzlichen Verweisen oder spezifischen Argumentationsmustern. Ein modularer Aufbau ermöglicht es vorzugsweise, Prompts gezielt für unterschiedliche Anwendungsfälle oder Gruppen von Beanstandungen zu optimieren. Zudem können Prompts durch adaptive Strategien oder iterative Verfeinerung flexibel auf die jeweilige Situation angepasst werden.

Das Verfahren nutzt spezialisierte Prompts, um die Antworten des maschinellen Lernmodells beispielsweise gezielt auf die Anforderungen spezifischer Gruppen von Beanstandungen oder Argumenten abzustimmen. Vorzugsweise werden bei der Erstellung dieser Prompts relevante Kontextinformationen berücksichtigt, wie etwa der rechtliche und/oder technische Rahmen, aus dem die Mitteilung stammt. Gruppenspezifische Vorgaben sorgen vorzugsweise dafür, dass die generierten Antworten den inhaltlichen und formalen Anforderungen der jeweiligen Domäne entsprechen. Diese Vorgaben können beispielsweise gesetzliche Bestimmungen, technische Standards oder andere normative Richtlinien umfassen.

Die Prompts können dynamisch angepasst werden, um die spezifischen Anforderungen einer Mitteilung oder eines Anwendungsfalls zu erfüllen. Vorzugsweise können sie durch kontinuierliches Training, Transfer-Learning und/oder Fine-Tuning weiterentwickelt werden, um die Leistung des Modells langfristig zu optimieren. Dies ermöglicht eine flexible Anpassung an sich ändernde Rahmenbedingungen, wie etwa neue gesetzliche Vorgaben oder veränderte Standards in einem bestimmten Anwendungsbereich.

Die Prompts können vorzugsweise auch automatisch erzeugt und/oder dynamisch angepasst werden, indem sie vorzugsweise auf Basis der Eingabedaten, des Kontexts und/oder der spezifischen Anforderungen generiert werden. Die automatische Erstellung erfolgt vorzugsweise durch Algorithmen, die relevante Informationen aus den Eingabedaten extrahieren und/oder strukturierte Anweisungen für das maschinelle Lernmodell generieren. Hierbei kommen vorzugsweise Techniken wie regelbasierte Systeme, maschinelles Lernen und Natural Language Processing zum Einsatz, um die wichtigsten Merkmale der Daten zu identifizieren und in die Prompts zu integrieren. Die dynamische Anpassung der Prompts erfolgt vorzugsweise durch Kontextanalysen, bei denen der Inhalt der Eingabedaten sowie die Ergebnisse früherer Verarbeitungsschritte berücksichtigt werden, um die Prompts vorzugsweise gezielt zu optimieren. Feedback-basierte Fine-Tuning-Methoden erlauben es vorzugsweise, Prompts an neue Anforderungen oder Nutzerfeedback anzupassen, während modulare Ansätze eine flexible Anpassung der Prompts durch Hinzufügen oder Entfernen spezifischer Module ermöglichen. Bei multimodalen Daten, die Text- und Bildinformationen umfassen, können Prompts vorzugsweise so gestaltet werden, dass sie beide Modalitäten adressieren und/oder die Daten umfassend analysieren. Diese Echtzeit-Generierung und/oder Anpassung von Prompts ermöglicht eine iterative Verfeinerung der Anweisungen und verbessert die Präzision und Relevanz der Modellantworten. Durch die Integration von Wissensdatenbanken und Ontologien können Prompts vorzugsweise zusätzlich mit spezifischen Informationen angereichert werden, um vorzugsweise komplexe Anforderungen zu erfüllen und qualitativ hochwertige Ergebnisse zu erzielen.

Ein technischer Vorteil dieses Verfahrens liegt in der erhöhten Präzision und Relevanz der generierten Antworten. Vorzugsweise sorgt das gezielte Prompt-Engineering dafür, dass die Antworten des maschinellen Lernmodells nicht nur inhaltlich korrekt, sondern auch spezifisch auf die jeweilige Gruppe abgestimmt sind. Dies verbessert die Qualität der Erwiderung und reduziert die Wahrscheinlichkeit von Fehlern oder Missverständnissen. Die Möglichkeit, die Prompts dynamisch anzupassen, erhöht die Flexibilität des Verfahrens und stellt sicher, dass es auch in komplexen oder sich verändernden Szenarien effizient eingesetzt werden kann.

Ein weiterer Vorteil besteht in der langfristigen Optimierung des Systems. Vorzugsweise können durch die Nachtrainierbarkeit und Feinabstimmung der Prompts wiederkehrende Muster in Mitteilungen oder Erwiderungen identifiziert und effizienter verarbeitet werden. Dies führt zu einer kontinuierlichen Verbesserung der Modellleistung und einer gesteigerten Effizienz bei der Bearbeitung von Mitteilungen. Insgesamt ermöglicht dieses Verfahren eine präzise, flexible und skalierbare Erstellung von Antworten, die den spezifischen Anforderungen der jeweiligen Domäne entsprechen.

Gemäß einem weiteren Aspekt wird ein Verfahren vorgeschlagen, wobei das maschinelle Lernmodell durch Training mit vorhandenen Paaren aus gelabelten Mitteilungen und gelabelten Erwiderungen trainiert oder zumindest fein abgestimmt wird. Vorzugsweise werden dabei spezifische Daten verwendet, die die relevanten Muster, Kontexte und Argumentationsweisen der jeweiligen Domäne abdecken.

Das Verfahren basiert darauf, dass das maschinelle Lernmodell durch Training mit gelabelten Daten lernt, wie aus bestimmten Eingangsinformationen strukturierte und kontextsensitive Erwiderungen generiert werden können. Vorzugsweise werden hierfür Datensätze verwendet, die eine Vielzahl von Mitteilungen und deren zugehörigen Erwiderungen enthalten, wobei die Inhalte sowohl inhaltlich als auch stilistisch annotiert sind. Diese Daten ermöglichen es dem Modell, Muster in der Struktur von Mitteilungen und in der Art und Weise, wie Erwiderungen aufgebaut werden, zu erkennen und anzuwenden. Durch das Fine-Tuning kann das Modell weiter an spezifische Anforderungen, wie rechtliche, technische oder sprachliche Besonderheiten, angepasst werden.

Ein technischer Vorteil dieses Verfahrens liegt in der Möglichkeit, das Modell auf die spezifischen Anforderungen und Inhalte der Domäne zu trainieren. Vorzugsweise wird dadurch die Präzision und Relevanz der generierten Antworten erhöht, da das Modell aus realen Beispielen lernt und seine Ergebnisse auf häufig vorkommende Muster und Argumentationsstrukturen stützt. Dies reduziert die Wahrscheinlichkeit von Fehlern oder unpassenden Antworten und führt zu einer deutlichen Qualitätssteigerung.

Ein weiterer Vorteil besteht in der Flexibilität, die durch das Fine-Tuning erreicht wird. Vorzugsweise können neue oder aktualisierte Datensätze verwendet werden, um das Modell an veränderte Rahmenbedingungen oder Anforderungen anzupassen. Dies ist besonders wertvoll in dynamischen Domänen, wie dem Recht oder der Technik, in denen sich Vorschriften, Standards oder typische Argumentationsmuster häufig ändern. Das kontinuierliche Training oder Nachjustieren ermöglicht zudem eine langfristige Verbesserung der Modellleistung, da neue Daten oder spezifische Anforderungen schrittweise integriert werden können.

Durch den Einsatz gelabelter Daten wird zudem die Nachvollziehbarkeit der Modellentscheidungen verbessert, da die Ergebnisse auf klar definierten Trainingsdaten basieren. Dies erhöht das Vertrauen in die generierten Antworten und unterstützt die Konsistenz und Qualität der Erwiderungen. Insgesamt bietet dieses Verfahren eine robuste, skalierbare und präzise Lösung zur Erstellung schriftlicher Antworten, die an die jeweiligen Anforderungen optimal angepasst sind.

In einem weiteren Aspekt wird ein Computerprogrammprodukt vorgeschlagen, umfassend Befehle, die bei der Ausführung des Programms durch einen Computer diesen veranlassen, die Schritte des vorliegenden Verfahrens in einem seiner Aspekte auszuführen.

Das Computerprogrammprodukt umfasst vorzugsweise eine Sammlung von Anweisungen, die in einer oder mehreren Programmiersprachen geschrieben sind und die vorzugsweise darauf ausgelegt sind, die im Verfahren beschriebenen Aufgaben und/oder Funktionen zu erfüllen, wenn sie von einem Computer ausgeführt werden. Die Anweisungen im Programm sind vorzugsweise so gestaltet, dass sie den Computer veranlassen, die verschiedenen Schritte und Abläufe des Verfahrens gemäß den angegebenen Aspekten zu durchlaufen und durchzuführen.

In einem weiteren Aspekt wird ein computerlesbarer Datenträger vorgeschlagen, auf dem ein solches Computerprogrammprodukt gespeichert ist.

Dieser computerlesbare Datenträger kann verschiedene physische Medien umfassen, wie CDs, DVDs, USB-Sticks, Festplatten oder Halbleiterspeicher, bspw. SSDs, die von Computern oder ähnlichen elektronischen Geräten gelesen werden können. Das auf dem Datenträger gespeicherte Computerprogrammprodukt umfasst vorzugsweise eine Sammlung von Anweisungen oder Code, die von einem Computer ausgeführt werden können, um spezifische Funktionen oder Aufgaben zu erfüllen. Das Programm kann in verschiedenen Programmiersprachen geschrieben sein und unterschiedliche Komponenten wie ausführbare Dateien, Bibliotheken, Konfigurationsdateien und Dokumentationen enthalten. Der Datenträger ermöglicht es vorzugsweise dem Computer, das darauf gespeicherte Programm zu lesen und auszuführen, um die vorgesehenen Funktionen zu realisieren.

Ein konkretes Ausführungsbeispiel zur Anwendung des Verfahrens ist die automatisierte Erstellung einer Erwiderung auf einen behördlichen Bescheid im Bauwesen. Ein Bauantragsteller erhält einen Bescheid, in dem die geplante Errichtung eines Gebäudes aufgrund einer angeblichen Verletzung lokaler Bauvorschriften abgelehnt wird. Der Bescheid enthält mehrere Textabschnitte, die rechtliche und technische Beanstandungen sowie Verweise auf spezifische Paragraphen der Bauordnung umfassen. Das Verfahren wird eingesetzt, um auf diesen Bescheid zu reagieren. Zunächst werden die Textdaten des Bescheids durch einen Scanner digitalisiert und bereitgestellt. Das Verfahren extrahiert anschließend die relevanten Informationen, wie die zitierten Paragraphen, technische Anforderungen und die angegebenen Begründungen. Diese Informationen werden in Gruppen unterteilt, beispielsweise nach rechtlichen Beanstandungen, technischen Anforderungen und allgemeinen Hinweisen. Das maschinelle Lernmodell generiert daraufhin eine strukturierte Erwiderung, die Gegenargumente zu den einzelnen Beanstandungen liefert, wie etwa alternative Auslegungen der Paragraphen, Hinweise auf Ausnahmeregelungen oder technische Lösungen, die die Einhaltung der Vorschriften sicherstellen. Der Confidence-Score des Modells wird überprüft, um sicherzustellen, dass die Erwiderung fundiert und schlüssig ist. Falls der Confidence-Score niedrig ist, werden zusätzliche Verarbeitungsschritte durchgeführt, beispielsweise durch Zugriff auf externe Quellen wie baurechtliche Datenbanken, um weitere Informationen in die Erwiderung einzubinden. Das Verfahren ermöglicht so eine präzise, schnelle und qualitativ hochwertige Erstellung der Erwiderung, die den Bauantragsteller bei der Klärung des Bescheids unterstützt.

Ein weiteres Ausführungsbeispiel zur Anwendung des Verfahrens ist die automatisierte Erstellung einer Antwort auf Begutachtungskommentare im Rahmen von wissenschaftlichen Publikationsprozessen. Ein Autor reicht ein wissenschaftliches Manuskript bei einer Publikationsstelle, beispielsweise einem Verlag oder einer Konferenz, ein und erhält daraufhin eine Begutachtung, die spezifische Kommentare und Fragen zu Aspekten wie Inhalt, Methodik, Darstellung oder Relevanz des Inhaltes des Manuskripts enthält. Die Begutachtung umfasst typischerweise sowohl allgemeine als auch spezifische Anmerkungen, oft mit Verweisen auf relevante Literatur oder methodische Schwächen. Das Verfahren wird eingesetzt, um eine strukturierte Antwort auf die Begutachtung zu generieren, einschließlich einer möglichen Überarbeitung des Manuskripts.

Zu diesem Zweck werden zunächst die Textdaten der Begutachtung sowie des Manuskripts digital bereitgestellt und durch das Verfahren analysiert. Dabei werden relevante Informationen wie die einzelnen Kommentare der Gutachter und/oder Herausgeber, die spezifischen Textstellen im Manuskript, auf die sich diese beziehen, und die formulierten Fragen extrahiert. Die extrahierten Daten werden kategorisiert, beispielsweise in methodische Rückfragen, inhaltliche Ergänzungswünsche und formale Anmerkungen. Auf Basis dieser Analyse generiert das maschinelle Lernmodell eine Antwort, die für jede Anmerkung und Frage bewertet, ob zugestimmt und eine entsprechende Änderung im Text als Folge eingeleitet oder eine Gegenargumentation formuliert wird. Dies umfasst unter anderem die Formulierung von Klarstellungen, das Einfügen zusätzlicher Referenzen oder die Vorschläge für Textänderungen, die direkt in einer überarbeiteten Version des Manuskripts implementiert werden können. Falls erforderlich, wird eine änderungsmarkierte Version des Manuskripts erstellt, um die vorgenommenen Anpassungen transparent darzustellen. Die Änderungen werden in der Antwort typischerweise Punkt für Punkt zu den Antworten im in-line-Stil erläutert, sodass jeder Gutachterkommentar direkt mit der entsprechenden Reaktion und Anpassung verknüpft ist.Ein weiteres Ausführungsbeispiel zur Anwendung des Verfahrens ist die automatisierte Erstellung einer Erwiderung auf einen Prüfungsbescheid im Patentwesen. Ein Anmelder reicht eine Patentanmeldung ein und erhält einen Prüfungsbescheid, in dem die Patentfähigkeit der Anmeldung aufgrund von mangelnder Neuheit und/oder erfinderischer Tätigkeit beanstandet wird. Der Prüfungsbescheid enthält Verweise auf Stand-der-Technik-Dokumente, wie Patent- oder Nichtpatentschriften, und erläutert die Gründe für die Beanstandungen. Das Verfahren wird verwendet, um eine strukturierte Erwiderung auf den Prüfungsbescheid zu erstellen. Zunächst werden die Text- und Bilddaten des Prüfungsbescheids digital bereitgestellt und durch das Verfahren analysiert. Dabei werden relevante Informationen wie die zitierten Dokumente, die jeweiligen beanspruchten Merkmale und die Begründungen der Patentprüfungsstelle extrahiert. Die extrahierten Daten werden in Gruppen unterteilt, zum Beispiel in Beanstandungen zur Neuheit, zur erfinderischen Tätigkeit und zu formalen Anforderungen. Anschließend generiert das maschinelle Lernmodell eine Erwiderung, die für jede Beanstandung Gegenargumente formuliert, etwa durch Herausarbeiten von Unterschieden zwischen den zitierten Dokumenten und den beanspruchten Merkmalen oder durch Ergänzungen von Ausführungsbeispielen zur Verdeutlichung der erfinderischen Tätigkeit. Der Confidence-Score des Modells wird überprüft, um die Verlässlichkeit der Argumentation sicherzustellen. Wenn der Score niedrig ist, greift das Verfahren beispielsweise auf externe Quellen wie Patentsuchdatenbanken oder technische Fachliteratur zurück, um zusätzliche Informationen zu integrieren und/oder Einschränkungsmöglichkeiten auf Basis weiterer Patentansprüche zu untersuchen.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.
Fig. 1 zeigt ein schematisches Flussdiagramm eines Ausführungsbeispiels des vorliegenden Verfahrens.
Fig. 2 zeigt ein Blockschaltbild eines Ausführungsbeispiels des Verfahrens zur automatisierten Erstellung einer schriftlichen Erwiderung auf eine schriftliche Mitteilung.
Fig. 3 zeigt ein Blockdiagramm eines Computerprogrammprodukts zur automatisierten Erstellung einer schriftlichen Erwiderung.

### Detaillierte Beschreibung der Zeichnungen

In den Figuren der Zeichnungen bezeichnen gleiche Bezugszeichen gleiche oder funktionsgleiche Elemente, Bauteile oder Komponenten, soweit nichts Gegenteiliges angegeben ist.

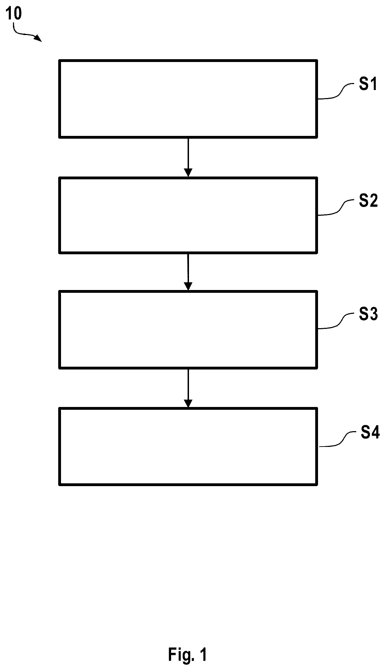

Fig. 1 zeigt ein schematisches Flussdiagramm eines Verfahrens zum automatischen Erzeugen einer schriftlichen Erwiderung auf eine schriftliche Mitteilung.

Das Verfahren kann in einer beliebigen Ausführungsform zumindest teilweise durch eine Vorrichtung 10 ausgeführt werden, die hierzu mehrere nicht näher dargestellte Komponenten, beispielsweise eine oder mehrere Bereitstellungseinrichtungen und/oder mindestens eine Auswerte- und Recheneinrichtung umfassen kann. Es versteht sich, dass die Bereitstellungseinrichtung gemeinsam mit der Auswerte- und Recheneinrichtung ausgebildet sein kann oder von dieser unterschiedlich sein kann. Ferner kann die Vorrichtung 10, die ein Teil eines Systems sein kann, eine Speichereinrichtung und/oder eine Ausgabeeinrichtung und/oder eine Anzeigeeinrichtung und/oder eine Eingabeeinrichtung umfassen.

Das computerimplementierte Verfahren umfasst mindestens die folgenden Schritte:
In einem Schritt S1 erfolgt ein Bereitstellen von Text- und/oder Bilddaten zu der schriftlichen Mitteilung. Die Daten können in Form eines digitalen Dokuments oder eines digitalisierten Papierdokuments vorliegen.

In einem Schritt S2 erfolgt ein Extrahieren von Text- und/oder Bildinformationen sowie text- und/oder bildbezogenen Kontextinformationen aus den bereitgestellten Daten. Dies umfasst vorzugsweise die Anwendung von Techniken wie optischer Zeichenerkennung (OCR), Strukturierung oder Klassifikation.

In einem Schritt S3 erfolgt ein Unterteilen der extrahierten Daten und/oder der Kontextinformationen in mitteilungsspezifische Gruppen. Diese Gruppen können beispielsweise Argumente, Beanstandungen oder andere inhaltlich zusammenhängende Informationen umfassen.

In einem Schritt S4 erfolgt ein Erzeugen der schriftlichen Erwiderung durch ein maschinelles Lernmodell. Hierbei werden die gruppenspezifischen Daten sowie gruppenspezifische Prompts verwendet. Die Generierung der Antwort erfolgt in Abhängigkeit eines vorbestimmten Confidence-Scores des Modells.

Vorzugsausführungsformen können zusätzliche Schritte wie das Zugreifen auf externe Dokumente oder Quellen, die Integration von Kontextinformationen oder die Nachverarbeitung der generierten Antwort umfassen.

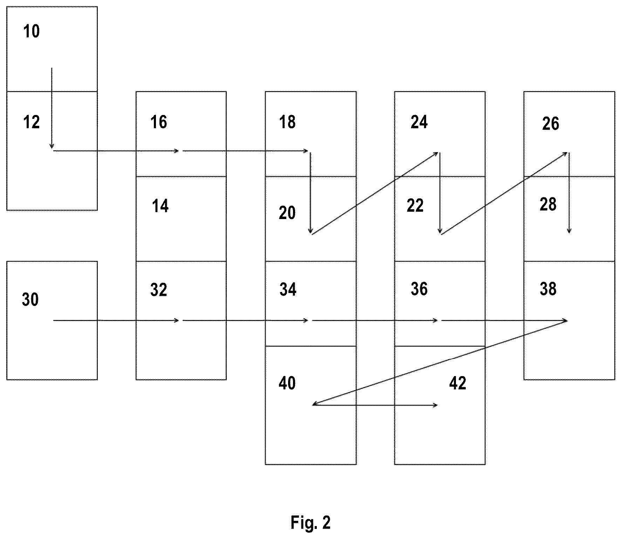

Fig. 2 zeigt ein Blockschaltbild eines Verfahrens zur automatisierten Erstellung einer schriftlichen Erwiderung auf eine schriftliche Mitteilung.

Das Verfahren wird von einer Vorrichtung 10 ausgeführt, die mehrere Komponenten aufweist. Die Vorrichtung 10 umfasst eine Bereitstellungseinrichtung 12, die für das Bereitstellen der Ausgangsdaten zuständig ist, sowie eine Auswerte- und Recheneinrichtung 14, die die nachfolgenden Verarbeitungsschritte steuert und ausführt. Zusätzlich kann die Vorrichtung 10 weitere Module enthalten, wie eine Speichereinrichtung zur Zwischenspeicherung von Daten oder eine Schnittstelle zum Zugriff auf externe Quellen.

Das Verfahren beginnt mit dem Schritt S1, dargestellt im Block 16, in dem die Bereitstellungseinrichtung 12 Text- und/oder Bilddaten bereitstellt. Diese Daten können als digitale Dokumente vorliegen oder durch Digitalisierung von Papierdokumenten erzeugt werden. Die Bereitstellungseinrichtung 12 kann dabei verschiedene Datenquellen einbeziehen, wie lokale Speichermedien, Scanner und/oder externe Datenbanken.

Im Schritt S2, dargestellt im Block 18, erfolgt das Extrahieren von Text- und/oder Bildinformationen sowie von Kontextinformationen aus den bereitgestellten Daten. Dieser Schritt wird von der Auswerte- und Recheneinrichtung 14 ausgeführt, die beispielsweise Techniken wie optische Zeichenerkennung (OCR) und Named Entity Recognition (NER) einsetzt, um relevante Informationen aus dem Datenmaterial zu extrahieren. Neben dem Textinhalt können auch visuelle Informationen wie Diagramme oder technische Zeichnungen analysiert werden.

Der Schritt S3, dargestellt im Block 20, umfasst das Unterteilen der extrahierten Informationen in gruppenspezifische Daten. Diese Gruppierung erfolgt auf Grundlage der inhaltlichen Struktur der Mitteilung, wobei Argumente, Beanstandungen oder andere logische Einheiten identifiziert und in Gruppen organisiert werden. Die Gruppenbildung ermöglicht eine zielgerichtete Verarbeitung durch das maschinelle Lernmodell.

Im Schritt S4, dargestellt im Block 22, wird durch die Auswerte- und Recheneinrichtung 14 und das maschinelle Lernmodell 24 eine schriftliche Erwiderung erzeugt. Das maschinelle Lernmodell 24 verwendet die gruppenspezifischen Daten sowie speziell entwickelte Prompts, um präzise und strukturierte Antworten zu generieren.

Im Schritt S5, dargestellt im Block 26, erfolgt die Überprüfung des Confidence-Scores durch die Recheneinrichtung 14. Dieser Confidence-Scores gibt an, wie sicher das maschinelle Modell in Bezug auf die Korrektheit und Relevanz der generierten Antwort ist. Wenn der Confidence-Score beispielsweise unterhalb eines festgelegten Schwellenwertes liegt, wird die Verarbeitung an Block 28 weitergeleitet, in dem alternative Strategien wie Rückzugspositionen oder Einschränkungen entwickelt werden.

Im Schritt S6, dargestellt im Block 30, greift die Vorrichtung 10 auf externe Dokumente oder Quellen zu. Diese können beispielsweise durch Technologien wie Web-Scraping, Application Programming Interfaces (APIs) oder semantische Suchanfragen erschlossen werden.

Im Schritt S7, dargestellt im Block 32, werden die externen Daten durch Vorverarbeitungsmethoden wie beispielsweise Zusammenfassung, Klassifikation oder Tokenisierung aufbereitet.

Schritt S8, dargestellt im Block 34, beschreibt die Tokenisierung und hierarchische Verarbeitung von großen Datenmengen. Lange Dokumente werden in kleinere Segmente unterteilt, die parallel verarbeitet werden können. Die hierarchische Struktur gewährleistet, dass auch Zusammenhänge zwischen den Segmenten erhalten bleiben.

Im Schritt S9, dargestellt im Block 36, werden Agenten-Modelle in den Prozess integriert. Diese Agenten übernehmen Aufgaben wie die dynamische Koordination von Verarbeitungsschritten, die Vorverarbeitung externer Daten und die Nachbearbeitung der generierten Antwort.

Im Schritt S10, dargestellt im Block 38, erfolgt das Zusammenfügen der gruppenspezifischen Antworten zu einer Gesamtantwort. Vorzugsweise werden hierfür Templates verwendet, die eine strukturierte und konsistente Darstellung der Erwiderung sicherstellen.

Der Schritt S11, dargestellt im Block 40, umfasst das kontextbasierte Prompt-Engineering, bei dem Prompts dynamisch an die spezifischen Anforderungen der Mitteilung angepasst werden. Das System kann hierbei aus Feedback und neuen Daten lernen, um die Prompts kontinuierlich zu verbessern.

Im Schritt S12, dargestellt im Block 42, wird das maschinelle Lernmodell durch Training mit gelabelten Datensätzen weiter optimiert. Diese Datensätze bestehen aus Paaren von Mitteilungen und den dazugehörigen Erwiderungen und ermöglichen es dem Modell, typische Muster und Argumentationsstrukturen zu erlernen.

Die in Fig. 2 dargestellten Schritte arbeiten vorzugsweise gemeinsam, um ein effizientes, flexibles und skalierbares Verfahren zur Erstellung von schriftlichen Erwiderungen zu ermöglichen. Die Vorrichtung 10 und ihre Komponenten gewährleisten eine präzise und zuverlässige Umsetzung der einzelnen Verfahrensschritte.

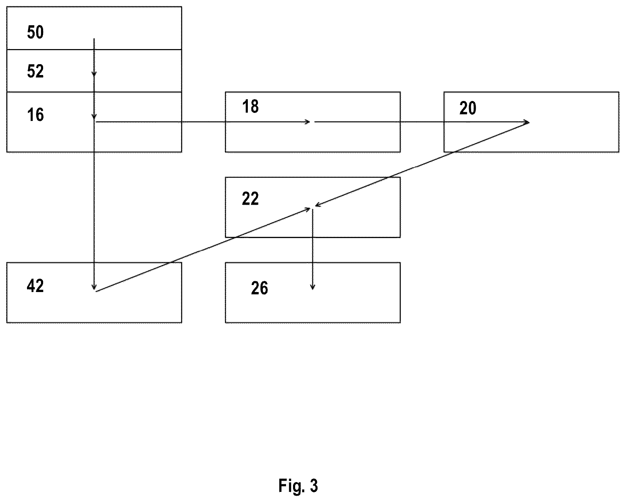

Fig. 3 zeigt ein Blockdiagramm eines Computerprogrammprodukts 50 zur automatisierten Erstellung einer schriftlichen Erwiderung.

Das Computerprogrammprodukt 50 umfasst Befehle, die bei der Ausführung durch eine Vorrichtung 10 die Schritte des Verfahrens ausführen. Der Prozess beginnt mit dem Programmstart 52, der die Initialisierung der Vorrichtung 10 sowie der Bereitstellungseinrichtung 12 und der Auswerte- und Recheneinrichtung 14 ermöglicht.

Im ersten Schritt, dargestellt im Block 16, erfolgt das Bereitstellen von Text- und/oder Bilddaten durch die Bereitstellungseinrichtung 12. Diese Daten können als digitale Dokumente oder digitalisierte Papierdokumente vorliegen.

Der nächste Schritt, Block 18, umfasst das Extrahieren von Text- und/oder Bildinformationen sowie Kontextinformationen aus den bereitgestellten Daten. Dieser Schritt wird durch die Auswerte- und Recheneinrichtung 14 ausgeführt und kann Techniken wie optische Zeichenerkennung (OCR) oder Named Entity Recognition (NER) einsetzen.

Im Block 20 erfolgt die Gruppierung der extrahierten Informationen in mitteilungsspezifische Daten, wie Beanstandungen oder Argumente. Diese Gruppierung dient der strukturierten Weiterverarbeitung.

Im nächsten Schritt, Block 22, wird die schriftliche Erwiderung durch das maschinelle Lernmodell 24 erzeugt. Das Modell verwendet die gruppenspezifischen Daten und Prompts, um präzise Antworten zu generieren.

Nach der Generierung der Antwort erfolgt im Block 26 die Überprüfung des Confidence-Scores. Dieser Schritt bewertet die Verlässlichkeit und Qualität der generierten Antwort. Falls erforderlich, können alternative Strategien oder Anpassungen initiiert werden.

Parallel zu diesen Schritten ermöglicht das Computerprogrammprodukt ein kontinuierliches Training mit gelabelten Daten, dargestellt im Block 42. Dabei wird das maschinelle Lernmodell 24 mit Paaren von Mitteilungen und Erwiderungen weiterentwickelt. Dieses Training verbessert die Qualität und Anpassungsfähigkeit des Modells. Die Ergebnisse des Trainingsprozesses fließen zurück in den Schritt der Antwortgenerierung (Block 22), um die Leistungsfähigkeit des Modells kontinuierlich zu optimieren.

Der Programmstart 52 sowie die logischen Verbindungen zwischen den Blöcken verdeutlichen die zentralen Abläufe. Fig. 3 illustriert die Zusammenhänge zwischen den Verfahrensschritten und die zentrale Rolle des Computerprogrammprodukts 50 bei der automatisierten Erstellung von Erwiderungen.

### Bezugszeichenliste

- 10: Vorrichtung
- 12: Bereitstellungseinrichtung
- 14: Auswerte- und Recheneinrichtung
- 16: Block für Bereitstellung der Daten
- 18: Block für Extrahieren von Informationen
- 20: Block für Unterteilen in gruppenspezifische Daten
- 22: Block für Erzeugen der schriftlichen Erwiderung
- 24: Maschinelles Lernmodell
- 26: Block für Confidence-Score-Prüfung
- 28: Block für Strategien bei niedrigem Confidence-Score
- 30: Block für Zugriff auf externe Quellen
- 32: Block für Vorverarbeitung externer Daten
- 34: Block für Tokenisierung und hierarchische Verarbeitung
- 36: Block für Integration von Agenten-Modellen
- 38: Block für Zusammenfügen von Antworten mit Templates
- 40: Block für Kontextbasiertes Prompt-Engineering
- 42: Block für Training mit gelabelten Daten
- 50: Computerprogrammprodukt
- 52: Programmstart
- S1: Bereitstellen der Text- und/oder Bilddaten
- S2: Extrahieren von Text- und/oder Bildinformationen
- S3: Unterteilen in gruppenspezifische Daten
- S4: Erzeugen der schriftlichen Erwiderung
- S5: Überprüfung des Confidence-Scores
- S6: Zugriff auf externe Dokumente oder Quellen
- S7: Vorverarbeitung externer Daten
- S8: Tokenisierung und hierarchische Verarbeitung
- S9: Integration von Agenten-Modellen
- S10: Zusammenfügen der Antworten mit Templates
- S 11: Kontextbasiertes Prompt-Engineering
- S12: Training mit gelabelten Daten

## Patentansprüche

1. Verfahren zum automatischen Erzeugen einer schriftlichen Erwiderung auf eine schriftliche Mitteilung, umfassend die Schritte:
- Bereitstellen von Text- und/oder Bilddaten zu der Mitteilung (S1, 12, 16);
- Extrahieren von Text- und/oder Bildinformationen und text- und/oder bildbezogenen Kontextinformationen aus den Text- und/oder Bilddaten (S2, 14, 18);
- Unterteilen der Text- und/oder Bilddaten und/oder der text- und/oder bildbezogenen Kontextinformationen in mitteilungsspezifische Gruppen (S3, 14, 20); und
- Erzeugen der schriftlichen Erwiderung durch ein maschinelles Lernmodell (S4, 24, 22) unter Verwendung der Gruppen von Text- und/oder Bilddaten und/oder der text- und/oder bildbezogenen Kontextinformationen sowie von gruppenspezifischen Prompts in Abhängigkeit der Erfüllung eines vorbestimmten Confidence-Scores (S5, 26) des maschinellen Lemmodells.

2. Verfahren nach Anspruch 1, wobei die Schritte in einer verwalteten Ausführungsumgebung ausgeführt werden, die außerhalb des Anwendungsprozesses liegende Ressourcen- und Lifecycle-Telemetrie bereitstellt, umfassend wenigstens eine der Größen CPU-Drosselung, Arbeitsspeicherdruck, Länge der Anfragewarteschlange, Anzahl gleichzeitiger Verbindungen sowie angekündigte Scale-In- oder Preemption-Signale, und/oder
wobei in Abhängigkeit dieser Telemetrie (i) Größe und Abarbeitungsreihenfolge der zu verarbeitenden Gruppen und/oder Datenpakete sowie (ii) die Tiefe einer rückstau-geregelten Warteschlange zwischen Vorverarbeitung, vorzugsweise umfassend einen Retrieval-Schritt, und Modellinferenz dynamisch festgelegt und laufend nachgeführt werden, derart, dass ein vorgebbarer globaler Speicher- und Latenzgrenzwert eingehalten wird.

3. Verfahren nach Anspruch 2, wobei bei einem angekündigten Scale-In- oder Preemption-Ereignis in Bearbeitung befindliche Teilaufgaben atomar in einen persistenten Zwischenspeicher serialisiert und auf einer verbleibenden Instanz ohne erneute Vorverarbeitung wiederaufgenommen werden.

4. Verfahren nach einem der vorhergehenden Ansprüche, wobei Modellgewichte, Tokenizer-Tabellen und/oder Embedding-Indizes als unveränderliche, inhaltsadressierte Artefakte auf einem instanznahen Massenspeicher der Ausführungsumgebung gehalten und für die Inferenz read-only über speicherabbildendes Einbinden (Memory-Mapping) mit seiten- und Cache-linien-ausgerichteter Ablage geladen werden, wobei das Verfahren Prefetch-Operationen für erwartete Zugriffsoffsets auslöst und - sofern betriebssystemseitig verfügbar - große Speicherseiten verwendet, derart, dass Page-Fault-Rate, TLB-Miss-Rate und Kalte-Start-Latenz der Inferenz reduziert werden.

5. Verfahren nach einem der vorhergehenden Ansprüche, wobei das Verfahren um Agenten-Modell-Funktionen (S9, 36) ergänzt ist, die die Vor- und/oder Nachverarbeitung der Text- und/oder Bilddaten und/oder der erzeugten Erwiderung automatisieren, und wobei die Agenten-Modell-Funktionen insbesondere mindestens einen der folgenden Schritte ausführen:
- Vorverarbeitung der Text- und/oder Bilddaten, insbesondere Textextraktion, Segmentierung, Strukturierung, Klassifikation, Relevanzbewertung und/oder Integration externer Kontextinformationen durch Verknüpfung mit externen Datenquellen und/oder automatischer Token-Optimierung (S7, 32); und/oder
- Nachverarbeitung der erzeugten Erwiderung, insbesondere Plausibilitätsprüfung, Fehlererkennung, Qualitätssicherung, Anpassung von Sprache und Stil, Zusammenführung von Teilergebnissen und/oder Einfügen von Referenzen und Metadaten; und/oder
- Automatisierung von Prozessschritten, insbesondere der Kommunikation durch automatisches Versenden der Erwiderung, Empfang von Rückmeldungen und/oder Verwaltung und Archivierung der Bescheide, Erwiderungen und zugehörigen Daten in einer strukturierten Datenbank;
- Feedback-basierte Optimierung, insbesondere durch Rückmeldung aus dem Verfahren und/oder Identifikation erfolgreicher Erwiderungsmuster zur Anpassung und Verbesserung des maschinellen Lernmodells (S12, 42) und/oder der Prompts; und/oder
- Koordination und Entscheidungsfindung, wobei der Agent auf Basis von Confidence-Scores (S5, 26) und/oder anderen Kriterien insbesondere dynamisch weitere Verarbeitungsschritte einleitet und/oder Einschränkungsstrategien vorschlägt.

6. Verfahren nach einem der vorhergehenden Ansprüche, wobei, wenn der vorbestimmte Confidence-Score des maschinellen Lernmodells (S5, 26) nicht erfüllt wird, mindestens einer der folgenden Schritte ausgeführt wird:
- Ermittlung alternativer Strategien, insbesondere Rückzugspositionen, Einschränkungspositionen oder Zugeständnisse, die geeignet sind, den Anforderungen der Mitteilung zu entsprechen (S9, 36); und/oder
- Benachrichtigung eines Nutzers, dass der Confidence-Score nicht erfüllt ist, einschließlich einer Übersicht der identifizierten Unsicherheiten und Vorschläge für mögliche Anpassungen oder Ergänzungen der Erwiderung (S10, 38); und/oder
- Ergänzende Verarbeitungsschritte, einschließlich einer detaillierteren Vorverarbeitung der Text- und/oder Bilddaten (S7, 32), einer Erweiterung der Kontextinformationen durch zusätzliche externe Quellen (S6, 30) oder einer dynamischen Anpassung der Prompts (S11, 40) an die spezifischen Anforderungen der Mitteilung; und/oder
- Simulation von Szenarien, um die Erfolgsaussichten verschiedener Erwiderungsstrategien zu bewerten und eine Empfehlung für die optimale Vorgehensweise zu generieren.

7. Verfahren nach einem der vorhergehenden Ansprüche, wobei das maschinelle Lernmodell (24) ein Sprachmodell, ein hybrides Modell, ein Transformer-Modell und/oder ein Convolutional Neural Network (CNN) umfasst und/oder ein multimodales Modell, ein großes Sprachmodell (LLM), ein nachtrainierbares Modell, ein hierarchisches Modell oder ein Schüler-Lehrer-Netzwerk umfasst.

8. Verfahren nach einem der vorhergehenden Ansprüche, wobei das Verfahren in einem Zero-Data-Retention-Modus betrieben wird, in dem (a) sämtliche Eingabedaten sowie daraus abgeleitete Zwischenrepräsentationen einschließlich Tokenizer-Zwischenergebnisse, Embeddings und Retrieval-Treffer ausschließlich im flüchtigen Speicher verarbeitet werden, (b) ein Auslagern in nichtflüchtigen Speicher durch Betriebssystemmittel zum Sperren der Speicherseiten und durch Deaktivieren von Crash-/Core-Dumps verhindert wird, (c) temporäre Ablagen ausschließlich in einem flüchtigen Dateisystem erfolgen, während persistente Dateisysteme schreibseitig gesperrt oder nur read-only eingebunden sind, und (d) nach Bereitstellung der Erwiderung belegte Speicherbereiche deterministisch überschrieben und freigegeben werden, wobei keine Nutzlastdaten - einschließlich Embeddings - protokolliert oder in einen Vektorspeicher aufgenommen werden; bei angekündigten Scale-In-/Preemption-Ereignissen wird eine in Bearbeitung befindliche Teilaufgabe verworfen und nach Wiederaufnahme vollständig neu verarbeitet.

9. Verfahren nach Anspruch 8, wobei etwaige von der Ausführungsumgebung unvermeidbar angelegte Zwischenspeicher auf nichtflüchtigen Medien ausschließlich verschlüsselt mit einem pro Sitzung flüchtig abgeleiteten Schlüssel gehalten werden, der nach Abschluss der Sitzung vernichtet wird, so dass eine kryptografische Löschung der Zwischenspeicher erfolgt.

10. Verfahren nach einem der vorhergehenden Ansprüche, wobei die gruppenspezifischen Prompts einen maschinenlesbaren Steuerkopf umfassen, der außerhalb des Modells von der Inferenzlaufzeit ausgewertet wird und Felder für hartes Token-Budget, Ziel-Latenz, zulässigen Arbeits-/Grafikspeicherfußabdruck, numerischen Präzisionsmodus und/oder maximale Attention-Fensterlänge umfasst, und wobei die Inferenzlaufzeit in Abhängigkeit dieser Felder Modellvariante, Batch-Größe, Quantisierungsstufe, Kontextkürzung und/oder KV-Cache-Wiederverwendung einstellt, wobei bei drohender Überschreitung der per Telemetrie ermittelten Ressourcen-Grenzen die Reihenfolge und/oder Länge der in den Prompt einzufügenden Gruppen durch einen deterministischen, inhaltsunabhängigen Heuristik-Algorithmus angepasst wird und content-adressierte Platzhalter-Tokens verwendet werden, die vom Tokenizer auf vorab zwischengespeicherte Tokenfolgen aufgelöst werden, so dass Tokenisierungsaufwand, Speicherzugriffe und Latenz reduziert sind.

11. Verfahren nach einem der vorstehenden Ansprüche, wobei der Confidence-Score laufzeitadaptiv aus mindestens zwei der folgenden Komponenten gebildet wird: (i) modellinterne Wahrscheinlichkeiten eines Antwort-Präfixes, (ii) eine Stabilitätskomponente aus der Abweichung bei wenigstens einer kontrollierten Laufzeit-Perturbation und/oder einer einmaligen Mehrfachauswertung, und (iii) ein Kontextabdeckungsmaß aus der Übereinstimmung der referenzierten mit den während der Inferenz tatsächlich adressierten Kontextsegmenten; wobei die Perturbation wenigstens einen Parameter aus Präzision, Batch-Größe, Scheduling, Zufalls-Seed/Dropout oder KV-Cache-Verwendung verändert und die Präfixlänge konfigurierbar ist, und wobei bei Unterschreiten eines Schwellwerts die Inferenzlaufzeit ressourcenadaptiv mindestens einen Parameter aus Präzisionsmodus, Batch-Größe, Paketgröße, Kontextfenster oder Modellvariante anpasst, vorbehaltlich der extern erfassten Speicher-/Latenzbudgets.

12. Computerprogrammprodukt (50), umfassend Befehle, die bei der Ausführung des Programms durch einen Computer diesen veranlassen, die Schritte eines Verfahrens nach einem der Ansprüche 1 bis 11 auszuführen.

13. Vorrichtung (10) zum automatischen Erzeugen einer schriftlichen Erwiderung auf eine schriftliche Mitteilung, umfassend eine Recheneinheit (14), die ausgebildet ist, die Schritte eines Verfahrens nach einem der Ansprüche 1 bis 11 auszuführen.

## Geänderte Patentansprüche

### Geänderte Patentansprüche gemäss Regel 137(2) EPÜ.

1. Verfahren zum automatischen Erzeugen einer schriftlichen Erwiderung auf eine schriftliche Mitteilung, umfassend die Schritte:
- Bereitstellen von Text- und/oder Bilddaten zu der Mitteilung (S1, 12, 16);
- Extrahieren von Text- und/oder Bildinformationen und text- und/oder bildbezogenen Kontextinformationen aus den Text- und/oder Bilddaten (S2, 14, 18);
- Unterteilen der Text- und/oder Bilddaten und/oder der text- und/oder bildbezogenen Kontextinformationen in mitteilungsspezifische Gruppen (S3, 14, 20); und
- Erzeugen der schriftlichen Erwiderung durch ein maschinelles Lernmodell (S4, 24, 22) unter Verwendung der Gruppen von Text- und/oder Bilddaten und/oder der text- und/oder bildbezogenen Kontextinformationen sowie von gruppenspezifischen Prompts in Abhängigkeit der Erfüllung eines vorbestimmten Confidence-Scores (S5, 26) des maschinellen Lernmodells, wobei der Confidence-Score aus modell internen Wahrscheinlichkeiten und mindestens einer Stabilitätskomponente gebildet wird, und wobei bei Unterschreiten eines dem vorbestimmten Confidence-Score (26) zugeordneten Schwellwerts mindestens ein Inferenzparameter des maschinellen Lernmodells (24, 22) angepasst wird.

2. Verfahren nach Anspruch 1, wobei die Schritte in einer verwalteten Ausführungsumgebung ausgeführt werden, die außerhalb des Anwendungsprozesses liegende Ressourcen- und Lifecycle-Telemetrie bereitstellt, umfassend wenigstens eine der Größen CPU-Drosselung, Arbeitsspeicherdruck, Länge der Anfragewarteschlange, Anzahl gleichzeitiger Verbindungen sowie angekündigte Scale-In- oder Preemption-Signale, und/oder
wobei in Abhängigkeit dieser Telemetrie (i) Größe und Abarbeitungsreihenfolge der zu verarbeitenden Gruppen und/oder Datenpakete sowie (ii) die Tiefe einer rückstau-geregelten Warteschlange zwischen Vorverarbeitung, vorzugsweise umfassend einen Retrieval-Schritt, und Modellinferenz dynamisch festgelegt und laufend nachgeführt werden, derart, dass ein vorgebbarer globaler Speicher- und Latenzgrenzwert eingehalten wird.

3. Verfahren nach Anspruch 2, wobei bei einem angekündigten Scale-In- oder Preemption-Ereignis in Bearbeitung befindliche Teilaufgaben atomar in einen persistenten Zwischenspeicher serialisiert und auf einer verbleibenden Instanz ohne erneute Vorverarbeitung wiederaufgenommen werden.

4. Verfahren nach einem der vorhergehenden Ansprüche, wobei Modellgewichte, Tokenizer-Tabellen und/oder Embedding-Indizes als unveränderliche, inhaltsadressierte Artefakte auf einem instanznahen Massenspeicher der Ausführungsumgebung gehalten und für die Inferenz read-only über speicherabbildendes Einbinden (Memory-Mapping) mit seiten- und Cache-linien-ausgerichteter Ablage geladen werden, wobei das Verfahren Prefetch-Operationen für erwartete Zugriffsoffsets auslöst und - sofern betriebssystemseitig verfügbar - große Speicherseiten verwendet, derart, dass Page-Fault-Rate, TLB-Miss-Rate und Kalte-Start-Latenz der Inferenz reduziert werden.

5. Verfahren nach einem der vorhergehenden Ansprüche, wobei das Verfahren um Agenten-Modell-Funktionen (S9, 36) ergänzt ist, die die Vor- und/oder Nachverarbeitung der Text- und/oder Bilddaten und/oder der erzeugten Erwiderung automatisieren, und wobei die Agenten-Modell-Funktionen insbesondere mindestens einen der folgenden Schritte ausführen:
- Vorverarbeitung der Text- und/oder Bilddaten, insbesondere Textextraktion, Segmentierung, Strukturierung, Klassifikation, Relevanzbewertung und/oder Integration externer Kontextinformationen durch Verknüpfung mit externen Datenquellen und/oder automatischer Token-Optimierung (S7, 32); und/oder
- Nachverarbeitung der erzeugten Erwiderung, insbesondere Plausibilitätsprüfung, Fehlererkennung, Qualitätssicherung, Anpassung von Sprache und Stil, Zusammenführung von Teilergebnissen und/oder Einfügen von Referenzen und Metadaten; und/oder
- Automatisierung von Prozessschritten, insbesondere der Kommunikation durch automatisches Versenden der Erwiderung, Empfang von Rückmeldungen und/oder Verwaltung und Archivierung der Bescheide, Erwiderungen und zugehörigen Daten in einer strukturierten Datenbank;
- Feedback-basierte Optimierung, insbesondere durch Rückmeldung aus dem Verfahren und/oder Identifikation erfolgreicher Erwiderungsmuster zur Anpassung und Verbesserung des maschinellen Lernmodells (S12, 42) und/oder der Prompts; und/oder
- Koordination und Entscheidungsfindung, wobei der Agent auf Basis von Confidence-Scores (S5, 26) und/oder anderen Kriterien insbesondere dynamisch weitere Verarbeitungsschritte einleitet und/oder Einschränkungsstrategien vorschlägt.

6. Verfahren nach einem der vorhergehenden Ansprüche, wobei, wenn der vorbestimmte Confidence-Score des maschinellen Lernmodells (S5, 26) nicht erfüllt wird, mindestens einer der folgenden Schritte ausgeführt wird:
- Ermittlung alternativer Strategien, insbesondere Rückzugspositionen, Einschränkungspositionen oder Zugeständnisse, die geeignet sind, den Anforderungen der Mitteilung zu entsprechen (S9, 36); und/oder
- Benachrichtigung eines Nutzers, dass der Confidence-Score nicht erfüllt ist, einschließlich einer Übersicht der identifizierten Unsicherheiten und Vorschläge für mögliche Anpassungen oder Ergänzungen der Erwiderung (S10, 38); und/oder
- Ergänzende Verarbeitungsschritte, einschließlich einer detaillierteren Vorverarbeitung der Text- und/oder Bilddaten (S7, 32), einer Erweiterung der Kontextinformationen durch zusätzliche externe Quellen (S6, 30) oder einer dynamischen Anpassung der Prompts (S11, 40) an die spezifischen Anforderungen der Mitteilung; und/oder
- Simulation von Szenarien, um die Erfolgsaussichten verschiedener Erwiderungsstrategien zu bewerten und eine Empfehlung für die optimale Vorgehensweise zu generieren.

7. Verfahren nach einem der vorhergehenden Ansprüche, wobei das maschinelle Lernmodell (24) ein Sprachmodell, ein hybrides Modell, ein Transformer-Modell und/oder ein Convolutional Neural Network (CNN) umfasst und/oder ein multimodales Modell, ein großes Sprachmodell (LLM), ein nachtrainierbares Modell, ein hierarchisches Modell oder ein Schüler-Lehrer-Netzwerk umfasst.

8. Verfahren nach einem der vorhergehenden Ansprüche, wobei das Verfahren in einem Zero-Data-Retention-Modus betrieben wird, in dem (a) sämtliche Eingabedaten sowie daraus abgeleitete Zwischenrepräsentationen einschließlich Tokenizer-Zwischenergebnisse, Embeddings und Retrieval-Treffer ausschließlich im flüchtigen Speicher verarbeitet werden, (b) ein Auslagern in nichtflüchtigen Speicher durch Betriebssystemmittel zum Sperren der Speicherseiten und durch Deaktivieren von Crash-/Core-Dumps verhindert wird, (c) temporäre Ablagen ausschließlich in einem flüchtigen Dateisystem erfolgen, während persistente Dateisysteme schreibseitig gesperrt oder nur read-only eingebunden sind, und (d) nach Bereitstellung der Erwiderung belegte Speicherbereiche deterministisch überschrieben und freigegeben werden, wobei keine Nutzlastdaten - einschließlich Embeddings - protokolliert oder in einen Vektorspeicher aufgenommen werden; bei angekündigten Scale-In- /Preemption-Ereignissen wird eine in Bearbeitung befindliche Teilaufgabe verworfen und nach Wiederaufnahme vollständig neu verarbeitet.

9. Verfahren nach Anspruch 8, wobei etwaige von der Ausführungsumgebung unvermeidbar angelegte Zwischenspeicher auf nichtflüchtigen Medien ausschließlich verschlüsselt mit einem pro Sitzung flüchtig abgeleiteten Schlüssel gehalten werden, der nach Abschluss der Sitzung vernichtet wird, so dass eine kryptografische Löschung der Zwischenspeicher erfolgt.

10. Verfahren nach einem der vorhergehenden Ansprüche, wobei die gruppenspezifischen Prompts einen maschinenlesbaren Steuerkopf umfassen, der außerhalb des Modells von der Inferenzlaufzeit ausgewertet wird und Felder für hartes Token-Budget, Ziel-Latenz, zulässigen Arbeits- /Grafikspeicherfußabdruck, numerischen Präzisionsmodus und/oder maximale Attention-Fensterlänge umfasst, und wobei die Inferenzlaufzeit in Abhängigkeit dieser Felder Modellvariante, Batch-Größe, Quantisierungsstufe, Kontextkürzung und/oder KV-Cache-Wiederverwendung einstellt, wobei bei drohender Überschreitung der per Telemetrie ermittelten Ressourcen-Grenzen die Reihenfolge und/oder Länge der in den Prompt einzufügenden Gruppen durch einen deterministischen, inhaltsunabhängigen Heuristik-Algorithmus angepasst wird und content-adressierte Platzhalter-Tokens verwendet werden, die vom Tokenizer auf vorab zwischengespeicherte Tokenfolgen aufgelöst werden, so dass Tokenisierungsaufwand, Speicherzugriffe und Latenz reduziert sind.

11. Verfahren nach einem der vorstehenden Ansprüche, wobei der Confidence-Score laufzeitadaptiv aus mindestens zwei der folgenden Komponenten gebildet wird: (i) modellinterne Wahrscheinlichkeiten eines Antwort-Präfixes, (ii) eine Stabilitätskomponente aus der Abweichung bei wenigstens einer kontrollierten Laufzeit-Perturbation und/oder einer einmaligen Mehrfachauswertung, und (iii) ein Kontextabdeckungsmaß aus der Übereinstimmung der referenzierten mit den während der Inferenz tatsächlich adressierten Kontextsegmenten; wobei die Perturbation wenigstens einen Parameter aus Präzision, Batch-Größe, Scheduling, Zufalls-Seed/Dropout oder KV-Cache-Verwendung verändert und die Präfixlänge konfigurierbar ist, und wobei bei Unterschreiten eines Schwellwerts die Inferenzlaufzeit ressourcenadaptiv mindestens einen Parameter aus Präzisionsmodus, Batch-Größe, Paketgröße, Kontextfenster oder Modellvariante anpasst, vorbehaltlich der extern erfassten Speicher-/Latenzbudgets.

12. Computerprogrammprodukt (50), umfassend Befehle, die bei der Ausführung des Programms durch einen Computer diesen veranlassen, die Schritte eines Verfahrens nach einem der Ansprüche 1 bis 11 auszuführen.

13. Vorrichtung (10) zum automatischen Erzeugen einer schriftlichen Erwiderung auf eine schriftliche Mitteilung, umfassend eine Recheneinheit (14), die ausgebildet ist, die Schritte eines Verfahrens nach einem der Ansprüche 1 bis 11 auszuführen.
